(19) Europäisches Patentamt
European Patent Office
Office européen des brevets

(11) EP 4 722 292 A1

(12) EUROPEAN PATENT APPLICATION
published in accordance with Art. 153(4) EPC

(43) Date of publication:
**08.04.2026 Bulletin 2026/15**

(21) Application number: **24831422.1**

(22) Date of filing: **09.05.2024**

(51) International Patent Classification (IPC):
***C08L 53/00*** *(2006.01)* ***C08F 290/06*** *(2006.01)*
***C08F 293/00*** *(2006.01)* ***C08K 5/3462*** *(2006.01)*
***C09B 55/00*** *(2006.01)* ***C09D 11/326*** *(2014.01)*
***C09K 23/52*** *(2022.01)*

(52) Cooperative Patent Classification (CPC):
**C08F 290/06; C08F 293/00; C08K 5/3462; C08L 53/00; C09B 55/00; C09D 11/326; C09K 23/52**

(86) International application number:
**PCT/JP2024/017279**

(87) International publication number:
**WO 2025/004549 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.06.2023 JP 2023108115**

(71) Applicant: **Otsuka Chemical Co., Ltd.**
**Osaka-shi, Osaka 540-0021 (JP)**

(72) Inventor: **SHIMIZU, Tatsuhiko**
**Tokushima-shi, Tokushima 771-0193 (JP)**

(74) Representative: **Manitz Finsterwald**
**Patent- und Rechtsanwaltspartnerschaft mbB**
**Martin-Greif-Straße 1**
**80336 München (DE)**

# (54) YELLOW-AZO-PIGMENT-CONTAINING COLORING COMPOSITION AND METHOD FOR PRODUCING SAME

(57) [Problem to be solved] An object of the present invention is to provide an aqueous coloring composition having an excellent dispersion stability in which a yellow azo pigment is used.

[Solution to solve problem] The coloring composition contains a yellow azo pigment, a dispersant and an aqueous dispersion medium, wherein the dispersant is a neutralized product of a block copolymer, the block copolymer has an A block comprising a structural unit (a-1) having a group represented by a formula (1) and a structural unit (a-2) having an acidic group, and a B block comprising a structural unit (b-1) having a nitrogen-containing heterocyclic group and a structural unit (b-2) having an aliphatic hydrocarbon group, comprises the structural unit (b-1) in an amount ranging from 51 mass % to 99 mass % in 100 mass % of the B block, and has an acid value of 50 mgKOH/g or more, and the dispersant has more than 50 mol % of an acidic group included in the structural unit (a-2) of the block copolymer neutralized.

$$*\text{-}(R^{12}O)_{m1}\text{-}R^{11} \qquad (1)$$

[In the formula (1), m1 represents an integer ranging from 2 to 30, $R^{11}$ represents a hydrogen atom or an alkyl group, $R^{12}$ represents an alkylene group, and * represents a bonding site.]

EP 4 722 292 A1

## Description

### TECHNICAL FIELD

The present invention relates to a coloring composition containing a yellow azo pigment and a production method of the same.

### BACKGROUND ART

A recording method using an inkjet printer is a method of conducting a recording by generating ink droplets from a fine nozzle, and discharging and adhering the ink droplets to a recorded material such as paper, film, fabric or the like. This method is being applied in various printing fields such as photography, various printings, and special printings like color filters, as it allows for easy and inexpensive image creation.

The ink (coloring composition) used in the inkjet printer contains a coloring material and a dispersion medium, and optionally an additive such as a surfactant that is added wherein necessary. As the coloring material, two types of coloring materials, namely a water-soluble dye, and a substantially water-insoluble coloring material such as a pigment, a disperse dye and an oil-soluble dye, are known. Among them, a recording image formed by using the water-soluble dye as the coloring material has an excellent image quality such as vividness, and a recording image formed by using the water-insoluble coloring material (particularly the pigment among them) has an excellent durability against light, ozone, water or the like. Due to the advantage of excellent durability, the use of the inkjet ink containing the water-insoluble coloring material is expanding. On the other hand, an aqueous ink is required from environmental and safety perspectives. However, when using the water-insoluble coloring material in the inkjet ink, it is necessary to micronize the coloring material and then disperse it uniformly in the ink. Thus, selecting a dispersant is important to ensure the uniform dispersion.

By the way, an ink is typically made by using four basic colors: yellow, magenta, cyan and black. Among them, due to the high vividness and coloring power, a yellow azo pigment such as Pigment Yellow 74 is generally used in a yellow aqueous inkjet ink. An aqueous ink having improved dispersion stability, thermostability, weather resistance or the like has been proposed for the aqueous ink in which the yellow azo pigment is used.

For example, Patent literature 1 discloses an aqueous pigment dispersion liquid for inkjet recording, containing a yellow azo pigment (A), an aromatic group-containing polymer (B), and an alkali metal hydroxide (C), wherein the aromatic group-containing polymer (B) is obtained by crosslinking an aromatic group-containing water-insoluble polymer (a) having an acid value of 200 mgKOH/g or more and 320 mgKOH/g or less with a water-insoluble multifunctional epoxy compound (b), and the acid value, neutralization degree and crosslinking degree of the water-insoluble polymer (a) satisfy that a value of [(100 - neutralization degree - crosslinking degree)/100] × (acid value of water-insoluble polymer (a)) is -30 mgKOH/g or more and 130 mgKOH/g or less (refer to claim 1 and paragraph 0011 of Patent literature 1).

### Citation List

### Patent Literature

Patent literature 1: JP 2018-109095 A

### SUMMARY OF THE INVENION

### Technical Problem

However, if the dispersant used in the aqueous pigment dispersion liquid disclosed in Patent literature 1 is used, the dispersion stability is not sufficient.

The present invention has been made in view of the above circumstances, and an object of the present invention is to provide an aqueous coloring composition having an excellent dispersion stability in which a yellow azo pigment is used as a coloring material.

### Solution to Problem

The present invention that has solved the above problem provides a coloring composition containing a yellow azo pigment, a dispersant and an aqueous dispersion medium, wherein the dispersant is a neutralized product of a block copolymer, the block copolymer has an A block comprising a structural unit (a-1) having a group represented by a formula (1) and a structural unit (a-2) having an acidic group, and a B block comprising a structural unit (b-1) having a nitrogen-containing heterocyclic group and a structural unit (b-2) having an aliphatic hydrocarbon group, the block copolymer

comprises the structural unit (b-1) in an amount ranging from 51 mass % to 99 mass % in 100 mass % of the B block, the block copolymer has an acid value of 50 mgKOH/g or more, and the dispersant has more than 50 mol % of an acidic group included in the structural unit (a-2) of the block copolymer neutralized.

$$*\text{-}(R^{12}O)_{m1}\text{-}R^{11} \qquad (1)$$

[In the formula (1), m1 represents an integer ranging from 2 to 30, $R^{11}$ represents a hydrogen atom or an alkyl group having 1 to 3 carbon atoms, $R^{12}$ represents an alkylene group having 1 to 3 carbon atoms, a plurality of $R^{12}$ are identical to or different from each other, and * represents a bonding site.]

The reason why the yellow azo pigment has an improved dispersibility if the neutralized product of the block copolymer having the specific structure is used as the dispersant in the coloring composition according to the present invention, is considered as follows. In the neutralized product of the block copolymer contained as the dispersant in the coloring composition according to the present invention, the A block comprises the structural unit (a-1) having the group represented by the formula (1) and the structural unit (a-2) having the acidic group, and more than 50 mol % of the acidic group included in the structural unit (a-2) is neutralized, thus the neutralized product of the block copolymer has a high affinity with the aqueous dispersion medium. In addition, the structural unit (b-1) having the nitrogen-containing heterocyclic group and the structural unit (b-2) having the aliphatic hydrocarbon group included in the B block absorb on the yellow azo pigment. Thus, the yellow azo pigment in the coloring composition according to the present invention has a high dispersibility.

**Effect of the invention**

According to the present invention, an aqueous coloring composition having an excellent dispersion stability in which a yellow azo pigment is used as a coloring material, is obtained.

**DESCRIPTION OF EMBODIMENTS**

Next, an example of the preferred embodiment of the present invention will be explained. However, the following embodiment is just an example. The present invention is not limited to the following embodiment.

<Definition>

In the present specification, the "(meth)acrylic" means "at least one of acrylic and methacrylic", the "(meth) acrylate" means "at least one of acrylate and methacrylate", the "(meth)acryloyl" means "at least one of acryloyl and methacryloyl", the "(meth)acrylic monomer" means "a monomer having a (meth)acryloyl group in the molecule" and also includes the "(meth)acrylate", the "vinyl monomer" means a monomer having a radically polymerizable carbon-carbon double bond in the molecule and also includes the "(meth)acrylic monomer" and the "(meth)acrylate", and the (meth) acrylate is an ester compound having a hydrogen atom of a carboxy group included in (meth)acrylic acid being substituted by an organic group.

In the present specification, the "structural unit derived from the (meth)acrylate" means "a structural unit having a carbon-carbon single bond formed by polymerizing the radically polymerizable carbon-carbon double bond of the (meth) acrylate", the "structural unit derived from the (meth)acrylic monomer" means "a structural unit having a carbon-carbon single bond formed by polymerizing the radically polymerizable carbon-carbon double bond of the (meth)acrylic monomer", and the "structural unit derived from the vinyl monomer" means "a structural unit having a carbon-carbon single bond formed by polymerizing the radically polymerizable carbon-carbon double bond of the vinyl monomer".

In the present specification, when "ranging from X to Y" (X and Y are any number) is described, it means "X or more and Y or less", when "X or more" (X is any number) is described, it means "X, or more than X", when "Y or less" (Y is any number) is described, it means "Y, or less than Y", and "X and/or Y (X and Y are any constitution)" means "at least one of X and Y" and includes three meanings of "only X", "only Y" and "X and Y".

In the present specification, the "A block" is interchangeable with an "A segment", and the "B block" is interchangeable with a "B segment".

[Block copolymer]

The block copolymer used in the dispersant of the coloring composition according to the present invention will be explained. It is noted that in the present specification, the amount of various structural units in the block copolymer, and the acid value, weight average molecular weight and molecular weight distribution of the block copolymer are values obtained when all the acidic groups included in the block copolymer are in an unneutralized state.

The block copolymer has an A block comprising a structural unit (a-1) having a group represented by a formula (1) and a structural unit (a-2) having an acidic group, and a B block comprising a structural unit (b-1) having a nitrogen-containing heterocyclic group and a structural unit (b-2) having an aliphatic hydrocarbon group. If the block copolymer is constituted, the structural units of the A block and the structural units of the B block are localized, which allowing for the efficient interaction the block copolymer with the yellow azo pigment that is the coloring material and the aqueous dispersion medium, thus improving the dispersion performance.

(A block)

The A block comprises the structural unit (a-1) having the group represented by the formula (1) and the structural unit (a-2) having the acidic group.

(Structural unit (a-1))

The A block comprises the structural unit (a-1) having the group represented by the formula (1). If the structural unit (a-1) is comprised, the affinity of the A block with the aqueous dispersion medium that is a dispersion medium improves. The structural unit (a-1) may be used solely, or at least two of them may be used in combination.

$$*\text{-}(R^{12}O)_{m1}\text{-}R^{11} \qquad (1)$$

[In the formula (1), $R^{11}$ represents a hydrogen atom or an alkyl group having 1 to 3 carbon atoms, $R^{12}$ represents an alkylene group having 1 to 3 carbon atoms, m1 represents an integer ranging from 2 to 30, a plurality of $R^{12}$ are identical to or different from each other, and * represents a bonding site.]

The alkyl group having 1 to 3 carbon atoms represented by $R^{11}$ may be linear or branched, and is preferably linear. Specific examples of the alkyl group having 1 to 3 carbon atoms represented by $R^{11}$ include a methyl group, an ethyl group, an n-propyl group, and an isopropyl group.

The alkylene group having 1 to 3 carbon atoms represented by $R^{12}$ may be linear or branched, and is preferably linear. Specific examples of the alkylene group having 1 to 3 carbon atoms represented by $R^{12}$ include a methylene group, an ethylene group, a trimethylene group, and a propane-1,2-diyl group. $R^{12}$ is preferably the ethylene group or the trimethylene group.

The above m1 is 2 or more, preferably 5 or more, and is 30 or less, preferably 20 or less, more preferably 15 or less.

The group represented by the formula (1) is introduced to the side chain moiety of the structural unit (a-1). The group represented by the formula (1) may directly bond to the carbon atom constituting the main chain, or may bond to the carbon atom constituting the main chain via other atom. The group represented by the formula (1) preferably bonds to the carbon atom constituting the main chain via an ester bond (-CO-O-) or an amide bond (-CO-NH-). It is noted that the bonding direction of the amide group or the ester group is not particularly limited.

Examples of the monomer for forming the structural unit (a-1) include a compound having one carbon-carbon double bond and one group represented by the formula (1) in the molecule.

The structural unit (a-1) is preferably a structural unit represented by the formula (2).

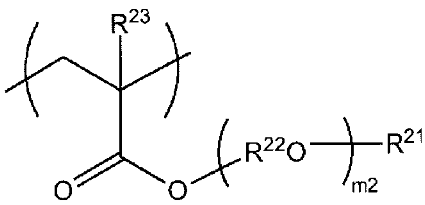

(2)

[In the formula (2), $R^{21}$ represents a hydrogen atom or an alkyl group having 1 to 3 carbon atoms, $R^{22}$ represents an alkylene group having 1 to 3 carbon atoms, $R^{23}$ represents a hydrogen atom or a methyl group, m2 represents an integer ranging from 2 to 30, and a plurality of $R^{22}$ are identical to or different from each other.]

The alkyl group having 1 to 3 carbon atoms represented by $R^{21}$ may be linear or branched, and is preferably linear. Specific examples of the alkyl group having 1 to 3 carbon atoms represented by $R^{21}$ include a methyl group, an ethyl group, an n-propyl group, and an isopropyl group.

The alkylene group having 1 to 3 carbon atoms represented by $R^{22}$ may be linear or branched, and is preferably linear. Specific examples of the alkylene group having 1 to 3 carbon atoms represented by $R^{22}$ include a methylene group, an ethylene group, a trimethylene group, and a propane-1,2-diyl group. $R^{22}$ is preferably the ethylene group or the

trimethylene group.

The above m2 is 2 or more, preferably 5 or more, and is 30 or less, preferably 20 or less, more preferably 15 or less.

$R^{23}$ is preferably a hydrogen atom.

Examples of the monomer constituting the structural unit represented by the formula (2) include a (meth)acrylate having a polyalkylene glycol structure. It is noted that the polyalkylene glycol moiety may be, for example, a mixture of ethylene oxide and propylene oxide. Examples of the (meth)acrylate having the polyalkylene glycol structure include a (meth)acrylate having a polyethylene glycol structure, such as polyethylene glycol (degree of polymerization = 2 to 30) methylether (meth)acrylate, polyethylene glycol (degree of polymerization = 2 to 30) ethylether (meth)acrylate, polyethylene glycol (degree of polymerization = 2 to 30) propylether (meth)acrylate, and polyethylene glycol (degree of polymerization = 2 to 30) mono(meth)acrylate; and a (meth)acrylate having a polypropylene glycol structural unit, such as polypropylene glycol (degree of polymerization = 2 to 30) methylether (meth)acrylate, polypropylene glycol (degree of polymerization = 2 to 30) ethylether (meth)acrylate, polypropylene glycol (degree of polymerization = 2 to 30) propylether (meth)acrylate, and polypropylene glycol (degree of polymerization = 2 to 30) mono(meth)acrylate.

The amount of the structural unit (a-1) in 100 mass % of the A block is preferably 10 mass % or more, more preferably 15 mass % or more, and even more preferably 20 mass % or more, and is preferably 70 mass % or less, more preferably 60 mass % or less, and even more preferably 50 mass % or less. If the amount of the structural unit (a-1) falls within the above range, the affinity with the aqueous dispersion medium is further enhanced.

(Structural unit (a-2))

The A block comprises the structural unit (a-2) having the acidic group. If the A block comprises the structural unit (a-2) in a predetermined amount, the affinity with the aqueous dispersion medium that is a dispersion medium is better. The structural unit (a-2) may be used solely, or at least two of them may be used in combination.

Examples of the acidic group included in the structural unit (a-2) having the acidic group include a carboxy group (-COOH), a sulfonic acid group ($-SO_3H$), a phosphoric acid group ($-OPO_3H_2$), a phosphonic acid group ($-PO_3H_2$), and a phosphinic acid group ($-PO_2H_2$), and the carboxy group or the sulfonic acid group is preferable, the carboxy group is more preferable.

The structural unit (a-2) having the acidic group is preferably a structural unit represented by the formula (3).

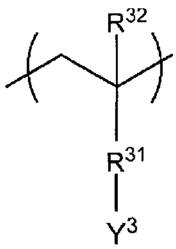

(3)

[In the formula (3), $R^{31}$ represents a single bond or a divalent organic group, $R^{32}$ represents a hydrogen atom or a methyl group, and $Y^3$ represents an acidic group.]

Examples of the divalent organic group represented by $R^{31}$ in the formula (3) include an alkylene group, an arylene group, an amide group ($-CONH-R^{311}-$ group), and an ester group ($-COO-R^{312}-$ group), and $-CONH-R^{311}-$ group or $-COO-R^{312}-$group is preferable. It is noted that the bonding direction of the amide group or the ester group is not particularly limited, the bonding form of the amide group is preferably $C-CO-NH-R^{311}-Y^3$, and the bonding form of the ester group is preferably $C-CO-O-R^{312}-Y^3$.

$R^{311}$ is preferably an alkylene group ($-R^{3111}-$ group) or an ester group ($-R^{3112}-O-CO-R^{3113}-$ group), more preferably the alkylene group. It is noted that the bonding direction of the ester group is not particularly limited, and the bonding form of the ester group is preferably $-R^{3112}-O-CO-R^{3113}-Y^3$.

$R^{3111}$ is preferably an alkylene group, more preferably a linear alkylene group or a branched alkylene group, and even more preferably a linear alkylene group having 1 to 10 carbon atoms or a branched alkylene group having 3 to 10 carbon atoms. Specific examples include a methylene group, an ethylene group, a trimethylene group, a tetramethylene group, a pentamethylene group, a hexamethylene group, a heptamethylene group, and a tert-butylene group.

$R^{3112}$ is preferably an alkylene group, more preferably a linear alkylene group or a branched alkylene group, even more preferably a linear alkylene group having 1 to 10 carbon atoms or a branched alkylene group having 3 to 10 carbon atoms, and even more preferably a linear alkylene group having 1 to 4 carbon atoms. Specific examples include a methylene group, an ethylene group, a trimethylene group, a tetramethylene group, a pentamethylene group, a hexamethylene group, and a heptamethylene group.

$R^{3113}$ is preferably a linear alkylene group, a branched alkylene group, a cyclic alkylene group or an arylene group, more preferably a linear alkylene group having 1 to 10 carbon atoms, a branched alkylene group having 3 to 10 carbon atoms, a cyclic alkylene group having 6 to 10 carbon atoms or an arylene group having 6 to 10 carbon atoms, and even more preferably a linear alkylene group having 1 to 4 carbon atoms. Specific examples include a methylene group, an ethylene group, a trimethylene group, a tetramethylene group, a pentamethylene group, a hexamethylene group, and a heptamethylene group.

$R^{312}$ is preferably an alkylene group (-$R^{3121}$- group) or an ester group (-$R^{3122}$-O-CO-$R^{3123}$- group), more preferably an alkylene group. It is noted that the bonding direction of the ester group is not particularly limited, and the bonding form of the ester group is preferably -$R^{3122}$-O-CO-$R^{3123}$-$Y^3$.

$R^{3121}$ is preferably an alkylene group, more preferably a linear alkylene group or a branched alkylene group, and even more preferably a linear alkylene group having 1 to 10 carbon atoms or a branched alkylene group having 3 to 10 carbon atoms. Specific examples include a methylene group, an ethylene group, a trimethylene group, a tetramethylene group, a pentamethylene group, a hexamethylene group, a heptamethylene group, and a tert-butylene group.

$R^{3122}$ is preferably an alkylene group, more preferably a linear alkylene group or a branched alkylene group, and even more preferably a linear alkylene group having 1 to 10 carbon atoms or a branched alkylene group having 3 to 10 carbon atoms, and even more preferably a linear alkylene group having 1 to 4 carbon atoms. Specific examples include a methylene group, an ethylene group, a trimethylene group, a tetramethylene group, a pentamethylene group, a hexamethylene group, and a heptamethylene group.

$R^{3123}$ is preferably an alkylene group or an arylene group, more preferably a linear alkylene group, a branched alkylene group, a cyclic alkylene group or an arylene group, even more preferably a linear alkylene group having 1 to 10 carbon atoms, a branched alkylene group having 3 to 10 carbon atoms, a cyclic alkylene group having 6 to 10 carbon atoms or an arylene group having 6 to 10 carbon atoms, and even more preferably a linear alkylene group having 1 to 4 carbon atoms. Specific examples include a methylene group, an ethylene group, a trimethylene group, a tetramethylene group, a pentamethylene group, a hexamethylene group, and a heptamethylene group.

Examples of the acidic group represented by $Y^3$ in the formula (3) include a carboxy group, a sulfonic acid group, a phosphoric acid group, a phosphonic acid group, and a phosphinic acid group, and the carboxy group or the sulfonic acid group is preferable, the carboxy group is more preferable.

The structural unit (a-2) having the acidic group is preferably at least one member selected from the group consisting of: a structural unit in which $R^{31}$ is a single bond, $R^{32}$ is a hydrogen atom or a methyl group, and $Y^3$ is an acidic group in the formula (3); a structural unit in which $R^{31}$ is an amide group (-CONH-$R^{3111}$-group), $R^{3111}$ is an alkylene group, $R^{32}$ is a hydrogen atom or a methyl group, and $Y^3$ is an acidic group; a structural unit in which $R^{31}$ is an ester group (-COO-$R^{3121}$-group), $R^{3121}$ is an alkylene group, $R^{32}$ is a hydrogen atom or a methyl group, and $Y^3$ is an acidic group; and a structural unit in which $R^{31}$ is an ester group (-COO-$R^{312}$-group), $R^{312}$ is an ester group (-$R^{3122}$-O-CO-$R^{3123}$- group), $R^{3122}$ is an alkylene group, $R^{3123}$ is an alkylene group or an arylene group, $R^{32}$ is a hydrogen atom or a methyl group, and $Y^3$ is an acidic group.

The structural unit (a-2) is more preferably a structural unit represented by the formula (31) and/or a structural unit represented by the formula (32).

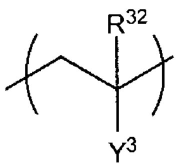

(31)

[In the formula (31), $R^{32}$ represents a hydrogen atom or a methyl group, and $Y^3$ represents an acidic group.]

Examples of the acidic group represented by $Y^3$ in the formula (31) include a carboxy group, a sulfonic acid group, a phosphoric acid group, a phosphonic acid group, and a phosphinic acid group, and the carboxy group or the sulfonic acid group is preferable, the carboxy group is more preferable.

$R^{32}$ in the formula (31) is preferably a hydrogen atom.

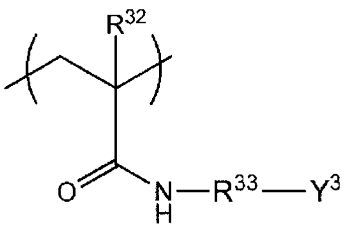

(32)

[In the formula (32), $R^{32}$ represents a hydrogen atom or a methyl group, $R^{33}$ represents an alkylene group, and $Y^3$ represents an acidic group.]

The alkylene group represented by $R^{33}$ in the formula (32) is preferably a linear alkylene group or a branched alkylene group, more preferably a linear alkylene group having 1 to 10 carbon atoms or a branched alkylene group having 3 to 10 carbon atoms. Specific examples include a methylene group, an ethylene group, a trimethylene group, a tetramethylene group, a pentamethylene group, a hexamethylene group, a heptamethylene group, and a tert-butylene group.

Examples of the acidic group represented by $Y^3$ in the formula (32) include a carboxy group, a sulfonic acid group, a phosphoric acid group, a phosphonic acid group, and a phosphinic acid group, and the carboxy group or the sulfonic acid group is preferable, the carboxy group is more preferable.

$R^{32}$ in the formula (32) is preferably a hydrogen atom.

As the monomer for forming the structural unit (a-2), at least one member selected from the group consisting of (meth)acrylic acid, vinyl sulfonic acid, 1-propene-2-sulfonic acid, vinyl phosphate, isopropenyl phosphate, vinyl phosphonic acid, isopropenyl phosphonic acid, vinyl phosphinic acid, (1-methylethenyl) phosphinic acid, mono(2-((meth) acryloyloxy)ethyl) succinate, 2-carboxyethyl (meth)acrylate, 2-((meth)acryloyloxy)ethane sulfonic acid, (meth)acrylamide t-butylsulfonic acid, and 2-(phosphonooxy)ethyl (meth)acrylate is preferable, and (meth)acrylate or (meth)acrylamide t-butylsulfonic acid is more preferable.

The amount of the structural unit (a-2) in 100 mass % of the A block is preferably 9 mass % or more, more preferably 11 mass % or more, and even more preferably 13 mass % or more, and is preferably 38 mass % or less, more preferably 36 mass % or less, and even more preferably 34 mass % or less. If the amount of the structural unit (a-2) falls within the above range, the coloring composition has better viscosity stability.

The total amount of the structural unit (a-1) and the structural unit (a-2) in 100 mass % of the A block is preferably 19 mass % or more, more preferably 26 mass % or more, and even more preferably 33 mass % or more. If the total amount of the structural unit (a-1) and the structural unit (a-2) falls within the above range, the affinity with the aqueous dispersion medium is further enhanced.

The mass ratio (a-1/a-2) of the structural unit (a-1) to the structural unit (a-2) in the A block is preferably 0.25 or more, more preferably 0.30 or more, and even more preferably 0.35 or more, and is preferably 7.8 or less, more preferably 6.7 or less, and even more preferably 5.6 or less. If the mass ratio (a-1/a-2) falls within the above range, the coloring composition has better viscosity stability.

The A block may consist of the structural unit (a-1) and the structural unit (a-2), and may further comprise other structural unit.

(Other structural unit)

The A block may comprise other structural unit than the structural unit (a-1) and the structural unit (a-2), as long as the effect of the present invention is not impaired.

Examples of the other structural unit include a structural unit derived from a (meth)acrylic monomer, and a structural unit derived from a vinyl monomer other than the (meth)acrylic monomer. The other structural unit may be used solely, or at least two of them may be used in combination.

Examples of the (meth)acrylic monomer include one or at least two vinyl monomers selected from the group consisting of a (meth)acrylate having a chain alkyl group, a (meth)acrylate having a cyclic alkyl group, a (meth)acrylate having an aromatic group, a (meth)acrylate having a hydroxy group, a (meth)acrylate having an alkoxy group, a (meth) acrylate having a cyclic ether group, and a (meth)acrylate having a lactone-modified hydroxy group.

Examples of the (meth)acrylate having the chain alkyl group include a (meth)acrylate having a linear alkyl group, and a (meth)acrylate having a branched alkyl group.

As the (meth)acrylate having the linear alkyl group, a (meth)acrylate having a linear alkyl group having 1 to 20 carbon atoms is preferable, a (meth)acrylate having a linear alkyl group having 1 to 10 carbon atoms is more preferable, and a (meth)acrylate having a linear alkyl group having 1 to 5 carbon atoms is even more preferable. Examples of the (meth)acrylate having the linear alkyl group include methyl (meth)acrylate, ethyl (meth)acrylate, n-propyl (meth)acrylate, n-butyl (meth)acrylate, n-pentyl (meth)acrylate, n-hexyl (meth)acrylate, n-octyl (meth)acrylate, n-nonyl (meth)acrylate, n-decyl (meth)acrylate, n-lauryl (meth)acrylate, and n-stearyl (meth)acrylate.

As the (meth)acrylate having the branched alkyl group, a (meth)acrylate having a branched alkyl group having 3 to 20 carbon atoms is preferable, and a (meth)acrylate having a branched alkyl group having 3 to 10 carbon atoms is more preferable. Examples of the (meth)acrylate having the branched alkyl group include isopropyl (meth)acrylate, isobutyl (meth)acrylate, sec-butyl (meth)acrylate, tert-butyl (meth)acrylate, isooctyl (meth)acrylate, 2-ethylhexyl (meth)acrylate, isononyl (meth)acrylate, and isodecyl (meth)acrylate.

As the (meth)acrylate having the cyclic alkyl group, a (meth)acrylate having a cyclic alkyl group having 6 to 12 carbon atoms is preferable. Examples of the cyclic alkyl group include a cyclic alkyl group with a monocyclic structure (e.g.

a cycloalkyl group), and a cyclic alkyl group with a bridged cyclic structure (e.g. an adamantyl group, a norbornyl group, and an isobornyl group). Specific examples of the (meth)acrylate having the cyclic alkyl group with the monocyclic structure include cyclohexyl (meth)acrylate, methylcyclohexyl (meth)acrylate, and cyclododecyl (meth)acrylate. Specific examples of the (meth)acrylate having the cyclic alkyl group with the bridged cyclic structure include isobornyl (meth)acrylate, dicyclopentenyloxyethyl (meth)acrylate, dicyclopentanyloxyethyl (meth)acrylate, 2-methyl-2-adamantyl (meth)acrylate, and 2-ethyl-2-adamantyl (meth)acrylate.

As the (meth)acrylate having the aromatic group, a (meth)acrylate having an aromatic group having 6 to 12 carbon atoms is preferable, and a (meth)acrylate having an aromatic group having 6 to 9 carbon atoms is more preferable. Examples of the aromatic group include an aryl group, and a group that has a chain moiety such as an alkylaryl group, an aralkyl group and an aryloxyalkyl group. Specific examples of the (meth)acrylate having the aromatic group include benzyl (meth)acrylate, phenyl (meth)acrylate, and phenoxyethyl (meth)acrylate.

As the (meth)acrylate having the hydroxy group, a hydroxyalkyl (meth)acrylate is preferable. The number of the carbon atoms of the hydroxyalkyl group of the hydroxyalkyl(meth)acrylate preferably ranges from 1 to 10, and more preferably ranges from 1 to 5. The hydroxyalkyl group may be linear or branched, and preferably has one hydroxy group. Specific examples of the (meth)acrylate having the hydroxy group include 2-hydroxyethyl (meth)acrylate, 3-hydroxypropyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate. Among them, a (meth) acrylate having a hydroxyalkyl group having 1 to 5 carbon atoms is more preferable.

Examples of the (meth)acrylate having the alkoxy group include methoxyethyl (meth)acrylate, and ethoxyethyl (meth)acrylate.

Examples of the (meth)acrylate having the cyclic ether group include glycidyl (meth)acrylate, tetrahydrofurfuryl (meth)acrylate, tetrahydrofuranyl methoxyethyl (meth)acrylate, tetrahydrofuranyl methoxypropyl (meth)acrylate, tetrahydrofuranyl methoxyisopropyl (meth)acrylate, (3-ethyloxetane-3-yl)methyl (meth)acrylate, (2-methyl-2-ethyl-1,3-dioxolane-4-yl)methyl (meth)acrylate, cyclic trimethylolpropaneformal (meth)acrylate, 2-[(2-tetrahydropyranyl)oxy]ethyl (meth)acrylate, and (1,3-dioxolane-4-yl)methyl (meth)acrylate.

Examples of the (meth)acrylate having the lactone-modified hydroxy group include a product obtained by adding a lactone to the (meth)acrylate having the hydroxy group, and a product obtained by adding caprolactone to the (meth) acrylate having the hydroxy group is preferable. The amount of lactone added preferably ranges from 1 mol to 10 mol, and more preferably ranges from 1 mol to 5 mol. Preferable examples of the (meth)acrylate having the lactone-modified hydroxy group include a product obtained by adding 1 mol of caprolactone to 2-hydroxyethyl (meth)acrylate, a product obtained by adding 2 mol of caprolactone to 2-hydroxyethyl (meth)acrylate, a product obtained by adding 3 mol of caprolactone to 2-hydroxyethyl (meth)acrylate, a product obtained by adding 4 mol of caprolactone to 2-hydroxyethyl (meth)acrylate, a product obtained by adding 5 mol of caprolactone to 2-hydroxyethyl (meth)acrylate, and a product obtained by adding 10 mol of caprolactone to 2-hydroxyethyl (meth)acrylate.

Specific examples of the vinyl monomer that can form the structural unit derived from the vinyl monomer other than the (meth)acrylic monomer include an α-olefin, a vinyl monomer containing a heterocycle, a vinyl amide, a vinyl carboxylate, and a diene. These vinyl monomers may have a hydroxy group or an epoxy group.

Examples of the α-olefin include 1-hexene, 1-octene, and 1-decene.

Examples of the vinyl monomer containing the heterocycle include 2-vinyl thiophene.

Examples of the vinyl amide include N-vinyl formamide, and N-vinyl acetamide.

Examples of the vinyl carboxylate include vinyl acetate, vinyl pivalate, and vinyl benzoate.

Examples of the diene include butadiene, isoprene, 4-methyl-1,4-hexadiene, and 7-methyl-1,6-octadiene.

It is preferable that the A block substantially does not comprise the structural unit (b-1) having the nitrogen-containing heterocyclic group which will be described later. In other words, the amount of the structural unit (b-1) having the nitrogen-containing heterocyclic group in 100 mass % of the A block is preferably 3 mass % or less, more preferably 1 mass % or less, and even more preferably 0.1 mass % or less.

When two or more types of structural units are comprised in the A block, various structural units comprised in the A block may be comprised in the A block in any form such as random copolymerization or block copolymerization, and is preferably comprised in the form of random copolymerization from the viewpoint of uniformity. For example, the A block may be formed by a copolymer having a structural unit consisting of an a1 block and a structural unit consisting of an a2 block.

(B block)

The B block comprises the structural unit (b-1) having the nitrogen-containing heterocyclic group and the structural unit (b-2) having the aliphatic hydrocarbon group.

(Structural unit (b-1))

The B block comprises the structural unit (b-1) having the nitrogen-containing heterocyclic group. If the structural unit (b-1) having the nitrogen-containing heterocyclic group is comprised, the dispersant has a high affinity with the yellow azo pigment that is a coloring material. The structural unit (b-1) may be one type or at least two types.

Examples of the nitrogen-containing heterocyclic group include an aromatic heterocyclic group such as 4-pyridyl group, 1-imidazolyl group, 2-pyridyl group and 9-carbazolyl group; and a non-aromatic heterocyclic group such as 1-piperidyl group, 1-pyrrolidyl group, 4-morpholino group, and a lactam group, and the lactam group is preferable.

The lactam group means a group obtained by removing a hydrogen atom or alkyl group bonding to a nitrogen atom of a lactam compound. It is noted that the lactam group may be substituted by a carboxy group, a sulfonic acid group, or an ester or salt thereof; an amino group; a hydroxy group; an alkyl group; or the like.

Examples of the lactam compound include caprolactam; N-alkyl caprolactams such as N-ethyl caprolactam, N-isopropyl caprolactam, N-isobutyl caprolactam, N-normal propyl caprolactam, N-normal butyl caprolactam, and N-cyclohexyl caprolactam; pyrrolidones such as 2-pyrrolidone, N-methyl-2-pyrrolidone (NMP), N-ethyl-2-pyrrolidone, N-isopropyl-2-pyrrolidone, N-isobutyl-2-pyrrolidone, N-normal propyl-2-pyrrolidone, N-normal butyl-2-pyrrolidone, and N-cyclohexyl-2-pyrrolidone; and piperidones such as 2-piperidone, N-methyl-2-piperidone, N-ethyl-2-piperidone, and N-isopropyl-2-piperidone.

The structural unit (b-1) is preferably the following structural unit represented by the formula (4).

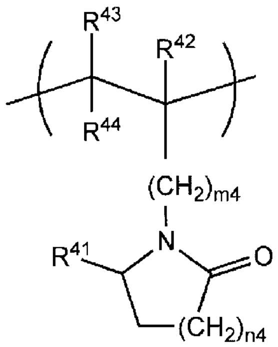

(4)

[In the formula (4), $R^{41}$, $R^{42}$, $R^{43}$ and $R^{44}$ are identical to or different from each other, and represent a hydrogen atom or an alkyl group having 1 to 10 carbon atoms and optionally a substituent group, m4 represents an integer ranging from 0 to 4, and n4 represents an integer ranging from 1 to 3.]

The number of the carbon atoms of the alkyl group in $R^{41}$ to $R^{44}$ preferably ranges from 1 to 6, and more preferably ranges from 1 to 4. As the alkyl group, a methyl group or an ethyl group is preferable, and the methyl group is more preferable. The substituent group in $R^{41}$ to $R^{44}$ is not particularly limited, and examples thereof include a carboxy group, a sulfonic acid group, and an ester or salt thereof; an amino group; and a hydroxy group.

As $R^{41}$, the hydrogen atom or the methyl group is preferable, and the hydrogen atom is more preferable.

As $R^{42}$ to $R^{44}$, the hydrogen atom is preferable.

As m4, an integer ranging from 0 to 2 is preferable, an integer ranging from 0 to 1 is more preferable, and 0 is even more preferable.

As n4, 1 or 2 is preferable, and 1 is more preferable.

Examples of the vinyl monomer for forming the structural unit represented by the formula (4) include a vinyl monomer having a five-membered lactam group, such as N-vinyl pyrrolidone, N-vinyl-5-methylpyrrolidone, N-vinyl-5-ethylpyrrolidone, N-vinyl-5-propylpyrrolidone, N-vinyl-5-butylpyrrolidone and 1-(2-propenyl)-2-pyrrolidone; a vinyl monomer having a six-membered lactam group, such as N-vinyl piperidone; and a vinyl monomer having a seven-membered lactam group, such as N-vinyl caprolactam. One or at least two vinyl monomers forming the structural unit represented by the formula (4) can be used. Among them, the vinyl monomer having the five-membered lactam group is preferable, N-vinyl pyrrolidone is more preferable.

The amount of the structural unit (b-1) in 100 mass % of the B block is preferably 51 mass % or more, more preferably 60 mass % or more, and even more preferably 70 mass % or more, and is preferably 99 mass % or less, more preferably 95 mass % or less, and even more preferably 90 mass % or less. If the amount of the structural unit (b-1) falls within the above range, absorption to the yellow azo pigment is better.

(Structural unit (b-2))

The B block comprises the structural unit (b-2) having the aliphatic hydrocarbon group. If the structural unit (b-2)

having the aliphatic hydrocarbon group is comprised, absorption to the yellow azo pigment is better. The structural unit (b-2) may be one type or at least two types.

In the structural unit (b-2) having the aliphatic hydrocarbon group, the aliphatic hydrocarbon group is introduced to the side chain moiety, and is preferably located at a position having a distance of at least two atoms from the main chain. In the present specification, "the aliphatic hydrocarbon group is located at the position having the distance of at least two atoms from the main chain" means a state that the hydrocarbon group bonds to a position of the second atom or an atom behind the second atom on the side chain, wherein the second atom or the atom behind the second atom is counted from a position of a carbon atom defined as zero (0) which is on the main chain of the polymer and to which the side chain bonds. The atom on the side chain may be an atom or substituent group other than a carbon atom.

Examples of the aliphatic hydrocarbon group include a linear alkyl group, a branched alkyl group, an alkyl group with a monocyclic structure, and an alkyl group with a polycyclic structure, and the linear alkyl group or the alkyl group with monocyclic structure is preferable.

The number of the carbon atoms of the linear alkyl group preferably ranges from 1 to 20, more preferably ranges from 1 to 10, and even more preferably ranges from 1 to 5. Examples of the linear alkyl group include a methyl group, an ethyl group, an n-propyl group, an n-butyl group, an n-hexyl group, an n-octyl group, an n-nonyl group, an n-decyl group, and an n-lauryl group.

The number of the carbon atoms of the branched alkyl group preferably ranges from 3 to 20, more preferably ranges from 3 to 10, and even more preferably ranges from 3 to 5. Examples of the branched alkyl group include an isopropyl group, an isobutyl group, a sec-butyl group, a tert-butyl group, a 2-ethylhexyl group, a neopentyl group, and an isooctyl group.

The number of the carbon atoms of the alkyl group with the monocyclic structure preferably ranges from 4 to 18, more preferably ranges from 6 to 12, and even more preferably ranges from 6 to 10. Examples of the alkyl group with the monocyclic structure include a cyclohexyl group, a methylcyclohexyl group, a cyclododecyl group, a 3,3,5-trimethylcyclohexyl group, and a 4-tert-butylcyclohexyl group.

The number of the carbon atoms of the alkyl group with the polycyclic structure preferably ranges from 5 to 20, more preferably ranges from 7 to 18, and even more preferably ranges from 9 to 15. Examples of the alkyl group with the polycyclic structure include a bornyl group, an isobornyl group, a 1-adamantyl group, a 2-adamantyl group, a 2-methyl-2-adamantyl group, a 2-ethyl-2-adamantyl group, a norbornyl group, a dicyclopentanyl group, and a dicyclopentenyl group.

The structural unit (b-2) is preferably a structural unit represented by the formula (5).

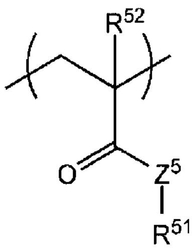

(5)

[In the formula (5), $R^{51}$ represents an aliphatic hydrocarbon group, $Z^5$ represents O or NH, and $R^{52}$ represents a hydrogen atom or a methyl group.]

Examples of the aliphatic hydrocarbon group represented by $R^{51}$ include a linear alkyl group, a branched alkyl group, an alkyl group with a monocyclic structure, and an alkyl group with a polycyclic structure, and the linear alkyl group or the alkyl group with the monocyclic structure is preferable.

The number of the carbon atoms of the linear alkyl group represented by $R^{51}$ preferably ranges from 1 to 20, more preferably ranges from 1 to 10, and even more preferably ranges from 1 to 5.

The number of the carbon atoms of the branched alkyl group represented by $R^{51}$ preferably ranges from 3 to 20, more preferably ranges from 3 to 10, and even more preferably ranges from 3 to 5.

The number of the carbon atoms of the alkyl group with the monocyclic structure represented by $R^{51}$ preferably ranges from 4 to 18, more preferably ranges from 6 to 12, and even more preferably ranges from 6 to 10.

The number of the carbon atoms of the alkyl group with the polycyclic structure represented by $R^{51}$ preferably ranges from 5 to 20, more preferably ranges from 7 to 18, and even more preferably ranges from 9 to 15.

$Z^5$ is preferably O.

$R^{52}$ is preferably a hydrogen atom.

Examples of the vinyl monomer for forming the structural unit represented by the formula (5) include a (meth)acrylate having a linear alkyl group, a (meth)acrylate having a branched alkyl group, a (meth)acrylate having an alkyl group with a monocyclic structure, a (meth)acrylate having an alkyl group with a polycyclic structure, a (meth)acrylamide having a linear alkyl group, a (meth)acrylamide having a branched alkyl group, a (meth)acrylamide having an alkyl group with a

monocyclic structure, and a (meth)acrylamide having an alkyl group with a polycyclic structure. Among them, one or at least two (meth)acrylates selected from the group consisting of the (meth)acrylate having the linear alkyl group and the (meth)acrylate having the alkyl group with the monocyclic structure is preferable.

Examples of the (meth)acrylate having the linear alkyl group include methyl (meth)acrylate, ethyl (meth)acrylate, n-propyl (meth)acrylate, n-butyl (meth)acrylate, n-pentyl (meth)acrylate, n-hexyl (meth)acrylate, n-octyl (meth)acrylate, n-nonyl (meth)acrylate, n-decyl (meth)acrylate, n-lauryl (meth)acrylate, and n-stearyl (meth)acrylate.

Examples of the (meth)acrylate having the branched alkyl group include isopropyl (meth)acrylate, isobutyl (meth) acrylate, sec-butyl (meth)acrylate, tert-butyl (meth)acrylate, isooctyl (meth)acrylate, 2-ethylhexyl (meth)acrylate, isononyl (meth)acrylate, and isodecyl (meth)acrylate.

Examples of the (meth)acrylate having the alkyl group with the monocyclic structure include cyclohexyl (meth) acrylate, methylcyclohexyl (meth)acrylate, cyclododecyl (meth)acrylate, 3,3,5-(trimethyl)cyclohexyl (meth)acrylate, and 4-(tert-butyl)cyclohexyl (meth)acrylate.

Examples of the (meth)acrylate having the alkyl group with the polycyclic structure include bornyl (meth)acrylate, isobornyl (meth)acrylate, 1-adamantyl (meth)acrylate, 2-adamantyl (meth)acrylate, 2-methyl-2-adamantyl (meth)acrylate, 2-ethyl-2-adamantyl (meth)acrylate, norbornyl (meth)acrylate, dicyclopentanyl (meth)acrylate, dicyclopentenyl (meth)acrylate, dicyclopentanyloxyethyl (meth)acrylate, and dicyclopentenyloxyethyl (meth)acrylate.

The amount of the structural unit (b-2) in 100 mass % of the B block is preferably 1 mass % or more, more preferably 5 mass % or more, and even more preferably 10 mass % or more, and is preferably 49 mass % or less, more preferably 40 mass % or less, and even more preferably 30 mass % or less. If the amount of the structural unit (b-2) falls within the above range, dispersibility of the yellow azo pigment can be further enhanced.

The total amount of the structural unit (b-1) and the structural unit (b-2) in 100 mass % of the B block is preferably 56 mass % or more, more preferably 60 mass % or more, even more preferably 65 mass % or more, and particularly preferably 90 mass % or more. If the total amount of the structural unit (b-1) and the structural unit (b-2) falls within the above range, dispersibility of the yellow azo pigment can be further enhanced.

The mass ratio (b-1/b-2) of the structural unit (b-1) to the structural unit (b-2) in the B block is preferably 1.04 or more, more preferably 1.1 or more, and even more preferably 1.2 or more, and is preferably 99 or less, more preferably 19 or less, and even more preferably 9 or less. If the mass ratio (b-1/b-2) falls within the above range, dispersibility of the yellow azo pigment can be further enhanced.

(Other structural unit)

The B block may comprise other structural unit than the structural unit (b-1) and the structural unit (b-2), as long as the effect of the present invention is not impaired. Specific examples of the vinyl monomer that can form the other structural unit of the B block include those exemplified in the specific examples of the monomer that can form the structural units of the A block and the monomer that can form the other structural unit of the A block.

The amount of the structural unit (a-1) in the B block is preferably 5 mass % or less, more preferably 3 mass % or less, and even more preferably 1 mass % or less. It is particularly preferable that the B block does not comprise the structural unit (a-1).

The amount of the structural unit (a-2) in the B block is preferably 5 mass % or less, more preferably 3 mass % or less, and even more preferably 1 mass % or less. It is particularly preferable that the B block does not comprise the structural unit (a-2).

When two or more types of structural units are comprised in the B block, various structural units comprised in the B block may be comprised in the B block in any form such as random copolymerization or block copolymerization, and is preferably comprised in the form of random copolymerization from the viewpoint of uniformity. For example, the B block may be formed by a copolymer having a structural unit consisting of a b1 block and a structural unit consisting of a b2 block.

(Block copolymer)

The block copolymer is preferably a linear block copolymer. In addition, the linear block copolymer may have any structure (arrangement), but it is preferably a copolymer having at least one structure selected from the group consisting of a $(A\text{-}B)_m$ type, a $(A\text{-}B)_m$-A type and a $(B\text{-}A)_m$-B type (m is an integer of 1 or more, i.e. an integer ranging from 1 to 3) wherein A represents the A block and B represents the B block, from the viewpoint of the properties of the linear block copolymer or the properties of the composition. Among them, an A-B type diblock copolymer is preferable from the viewpoint of the handleability during the processing and the properties of the composition. It is considered that if the A-B type diblock copolymer is constituted, the structural unit (a-1) and the structural unit (a-2) are localized in the A block and the structural unit (b-1) is localized in the B block, which allowing for the efficient interaction of the block copolymer with the yellow azo pigment (coloring material) and the aqueous dispersion medium. The block copolymer may have other block than the A block and the B block.

The amount of the A block in 100 mass % of the entire block copolymer is preferably 50 mass % or more, more preferably 60 mass % or more, and even more preferably 70 mass % or more, and is preferably 99 mass % or less, more preferably 95 mass % or less, and even more preferably 90 mass % or less.

The amount of the B block in 100 mass % of the entire block copolymer is preferably 1 mass % or more, more preferably 5 mass % or more, and even more preferably 10 mass % or more, and is preferably 50 mass % or less, more preferably 40 mass % or less, and even more preferably 30 mass % or less. If the amount of the A block and the B block is adjusted to the above range, the dispersion performance as the dispersant is further enhanced.

The mass ratio (A block/B block) of the A block to the B block in the block copolymer is preferably 50/50 or more, more preferably 60/40 or more, and even more preferably 70/30 or more, and is preferably 99/1 or less, more preferably 95/5 or less, and even more preferably 90/10 or less. If the mass ratio of the A block to the B block falls within the above range, the dispersion performance as the dispersant is further enhanced.

The amount of the structural unit (a-1) in 100 mass % of the entire block copolymer is preferably 5 mass % or more, more preferably 8 mass % or more, and even more preferably 10 mass % or more, and is preferably 63 mass % or less, more preferably 54 mass % or less, and even more preferably 45 mass % or less.

The amount of the structural unit (a-2) in 100 mass % of the entire block copolymer is preferably 5 mass % or more, more preferably 7 mass % or more, and even more preferably 10 mass % or more, and is preferably 34 mass % or less, more preferably 31 mass % or less, and even more preferably 28 mass % or less.

The amount of the structural unit (b-1) in 100 mass % of the entire block copolymer is preferably 5 mass % or more, more preferably 7 mass % or more, and even more preferably 10 mass % or more, and is preferably 49.5 mass % or less, more preferably 45 mass % or less, and even more preferably 40 mass % or less.

The amount of the structural unit (b-2) in 100 mass % of the entire block copolymer is preferably 0.1 mass % or more, more preferably 1 mass % or more, and even more preferably 3 mass % or more, and is preferably 24.5 mass % or less, more preferably 20 mass % or less, and even more preferably 15 mass % or less.

The acid value (acid value prior to the neutralization) of the block copolymer is preferably 50 mgKOH/g or more, more preferably 60 mgKOH/g or more, and even more preferably 70 mgKOH/g or more, and is preferably 200 mgKOH/g or less, more preferably 180 mgKOH/g or less, and even more preferably 160 mgKOH/g or less. If the acid value of the block copolymer falls within the above range, the coloring composition has better viscosity stability.

The molecular weight of the block copolymer is measured by a gel permeation chromatography (hereinafter referred to as "GPC") method. The weight average molecular weight (Mw) of the block copolymer is preferably 5,000 or more, more preferably 8,000 or more, and even more preferably 10,000 or more, and is preferably 40,000 or less, more preferably 30,000 or less, and even more preferably 20,000 or less. If Mw falls within the above range, the dispersion performance when used as the dispersant is better.

The molecular weight distribution of the block copolymer is preferably 2.5 or less, more preferably 2.0 or less, and even more preferably 1.8 or less. It is noted that the molecular weight distribution in the present specification is a value calculated by (weight average molecular weight (Mw) of block copolymer)/(number average molecular weight (Mn) of block copolymer). If the value is small, the resultant copolymer has a uniform-sized molecular weight with a narrow molecular weight distribution, and when the value is 1.0, the molecular weight distribution is narrowest. In other words, the lower limit of the molecular weight distribution is 1.0. If the molecular weight distribution of the block copolymer is more than 2.5, a block copolymer having a small molecular weight or a block copolymer having a great molecular weight is included.

(Production method of block copolymer)

Examples of the production method of the block copolymer by a polymerization reaction of vinyl monomers include a method of producing the A block, followed by polymerizing the monomer for forming the B block to the A block; a method of producing the B block, followed by polymerizing the monomer for forming the A block to the B block; and a method of producing the A block and the B block respectively, followed by coupling the A block and the B block.

The polymerization method is not particularly limited, and a living polymerization is preferable. In other words, the block copolymer is preferably polymerized by the living polymerization.

The living polymerization is substantially not accompanied by a side reaction such as a termination reaction or a chain transfer reaction among four elementary reactions (initiation reaction, growth reaction, termination reaction and chain transfer reaction) in a chain polymerization, allowing the vinyl monomers to react and the polymer chain to growth without inactivating the reacting point (polymerization growth terminal). Thus, it is easy to produce a copolymer having a narrow molecular weight distribution and a uniform composition. The living polymerization includes a living radical polymerization, a living anionic polymerization, a living cationic polymerization, etc. Among them, the living radical polymerization is preferable from the viewpoint of the simplicity of polymerization. In addition, the living radical polymerization is preferred because it allows for precise control of the molecular weight distribution and facilitates the production of a polymer with a uniform composition, while maintaining the simplicity and versatility of the conventional radical polymerization.

The living radical polymerization includes a method of using a compound that can generate a nitroxide radical (Nitroxide method, NMP method); a method of using a metal complex of copper, ruthenium or the like, and livingly conducting a polymerization from a halogenated compound that serves as a polymerization initiating compound (ATRP method); a method of using a dithiocarbonate or xanthate compound (RAFT method); a method of using an organic tellurium compound (TERP method); a method of using an organic iodine compound (ITP method); and a method of using an iodine compound as a polymerization initiating compound, and an organic compound such as a phosphorus compound, a nitrogen compound, an oxygen compound or a hydrocarbon as a catalyst (Reversible chain transfer catalyzed polymerization, RTCP method; Reversible complexation mediated polymerization, RCMP method), according to the difference in the means for stabilizing the polymerization growth terminal. Among these methods, the TERP method is preferably used from the viewpoint of the diversity of usable monomers, molecular weight control in a high molecular region, uniform composition or coloration.

The TERP method is a method of using an organic tellurium compound as a chain transfer agent to polymerize a radically polymerizable compound (vinyl monomer), and examples thereof include the methods described in WO 2004/14848 A, WO 2004/14962 A, WO 2004/072126 A, WO 2004/096870 A and WO 2020/116144 A.

Examples of the specific polymerization method of the TERP method include the following (a) to (d):

(a) a method of using an organic tellurium compound represented by the formula (T1) to polymerize the vinyl monomer;
(b) a method of using a mixture of the organic tellurium compound represented by the formula (T1) and an azo polymerization initiator to polymerize the vinyl monomer;
(c) a method of using a mixture of the organic tellurium compound represented by the formula (T1) and an organic ditelluride compound represented by the formula (T2) to polymerize the vinyl monomer; and
(d) a method of using a mixture of the organic tellurium compound represented by the formula (T1), the azo polymerization initiator and the organic ditelluride compound represented by the formula (T2) to polymerize the vinyl monomer.

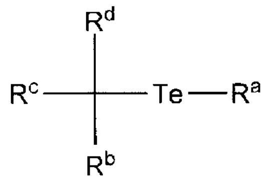

(T1)

$R^a$-Te-Te-$R^a$ (T2)

[In the formula (T1), $R^a$ represents an alkyl group having 1 to 8 carbon atoms, an aryl group or an aromatic heterocyclic group, $R^b$ and $R^c$ each independently represent a hydrogen atom or an alkyl group having 1 to 8 carbon atoms, $R^d$ represents an alkyl group having 1 to 8 carbon atoms, an aryl group, a substituted aryl group, an aromatic heterocyclic group, an alkoxy group, an acyl group, an amide group, an oxycarbonyl group, a cyano group, an allyl group or a propargyl group.

In the formula (T2), $R^a$ represents an alkyl group having 1 to 8 carbon atoms, an aryl group or an aromatic heterocyclic group.]

Specific examples of the organic tellurium compound represented by the formula (T1) include ethyl=2-methyl-2-n-butyltellanyl-propionate, ethyl=2-n-butyltellanyl-propionate, (2-hydroxyethyl)=2-methyl-methyltellanyl-propionate, and the organic tellurium compounds described in WO 2004/14848 A, WO 2004/14962 A, WO 2004/072126 A, WO 2004/096870 A and WO 2020/116144 A.

Specific examples of the organic ditelluride compound represented by the formula (T2) include dimethylditelluride and dibutylditelluride. The azo polymerization initiator can be used without particular limitation, as long as it is an azo polymerization initiator generally used in a radical polymerization, and examples thereof include 2,2'-azobis(isobutyronitrile) (AIBN), 2,2'-azobis(2,4-dimethylvaleronitrile) (ADVN), 1,1'-azobis(1-cyclohexanecarbonitrile) (ACHN), dimethyl-2,2'-azobisisobutyrate (MAIB), 4,4'-azobis(4-cyanovaleric acid) (ACVA), 2,2'-azobis(4-methoxy-2,4-dimethyl valeronitrile) (V-70), and 2,2'-azobis(N-butyl-2-methylpropionamide) (VAm-110).

In the polymerization step, the vinyl monomer and the organic tellurium compound of the formula (T1), and further the azo polymerization initiator and/or the organic ditelluride compound of the formula (T2) that is added depending on the type of the vinyl monomer and for the purposes of promoting the reaction and controlling the molecular weight and molecular weight distribution, are mixed in a container replaced with an inert gas. In this case, examples of the inert gas

include nitrogen, argon and helium. Argon or nitrogen is preferable. The amount of the vinyl monomer in the above (a), (b), (c) and (d) can be appropriately adjusted according to the desired properties of the copolymer.

The polymerization reaction can be conducted without using a solvent, and can also be conducted by using a non-protonic solvent or protonic solvent generally used in a radical polymerization and stirring the mixture. Examples of the usable non-protonic solvent include anisole, benzene, toluene, propylene glycol monomethylether acetate, ethyl acetate and tetrahydrofuran (THF). In addition, Examples of the protonic solvent include water, methanol and 1-methoxy-2-propanol. The solvent may be used solely, or at least two of them may be used in combination. The amount of the solvent can be appropriately adjusted, and for example, preferably ranges from 0.01 ml to 50 ml with respect to 1 g of the vinyl monomer. In the polymerization reaction, a surfactant and/or a dispersant can be further used in addition to the solvent. The reaction temperature and reaction time can be appropriately adjusted according to the molecular weight or molecular weight distribution of the obtained copolymer, but the reaction is generally conducted by stirring at a temperature ranging from 0 °C to 150 °C for 1 minute to 100 hours. In this case, the reaction is generally conducted under an ordinary pressure, and can also be conducted under an increased or reduced pressure. In addition, the polymerization reaction can also be conducted under light irradiation. After the polymerization reaction is completed, the target copolymer can be separated from the obtained reaction mixture by removing the used solvent, the residual vinyl monomer or the like by a regular separation and purification method.

The growth terminal of the copolymer obtained by the polymerization reaction has a form of $-TeR^a$ (in the formula, $R^a$ is same as the above) derived from the tellurium compound. The tellurium atom will be inactivated by the manipulation in the air after the completion of the polymerization reaction, but is sometimes residual. The copolymer having the residual tellurium atom at the terminal colors or has inferior thermostability, thus the tellurium atom is preferably removed. Examples of the method of removing the tellurium atom include a radical reduction method; an adsorbing method with active carbon or the like; and a method of adsorbing metals with an ion exchange resin or the like, and these methods can also be used in combination. It is noted that the other terminal (the terminal at the opposite side to the growth terminal) of the copolymer obtained by the polymerization reaction has a form of $-CR^bR^cR^d$ (in the formula, $R^b$, $R^c$ and $R^d$ are the same as $R^b$, $R^c$ and $R^d$ in the formula (T1)) derived from the tellurium compound. Thus, the copolymer obtained by the TERP method does not have a substituent group with a sulfur atom at a terminal.

[Coloring composition]

The coloring composition according to the present invention contains the yellow azo pigment, the dispersant, and the aqueous dispersion medium.

The coloring composition according to the present invention has a high dispersion performance for a coloring material, and thus can be used in an inkjet ink, a printing ink, a writing implement ink, a paint or the like.

[Yellow azo pigment]

The yellow azo pigment is a generic name of a yellow pigment having at least one azo structure or azomethine structure in the molecule. The azo structure is a structure having two nitrogen atoms connected by a double bond. The azomethine structure is a structure having a hydrocarbon group bonding to the nitrogen atom. The yellow azo pigment has the azo structure or azomethine structure in the molecule, and has a high affinity with the structural unit (b-1) having the nitrogen-containing heterocyclic group included in the dispersant. Thus, the coloring composition has an excellent dispersion stability for the yellow azo pigment. The yellow azo pigment may be used solely, or at least two of them may be used in combination.

Examples of the yellow azo pigment include an azo lake pigment, and an insoluble azo pigment.

Examples of the azo lake pigment include C.I. Pigment Yellow 133, 168 and 169. In the present specification, "C.I." is an abbreviation of color index.

Examples of the insoluble azo pigment include an azomethine metal complex pigment, an acetoacetarylide pigment, and a pyrazolone pigment.

Examples of the azomethine metal complex pigment include a metal complex pigment having an azomethine compound as a ligand and including a divalent or trivalent metal ion selected from the group consisting of Cu, Fe, Co, Ni and Zn, such as C.I. Pigment Yellow 117, 129, 150 and 153. Examples of the metal ion include $Cu^{2+}$, $Fe^{2+}$, $Fe^{3+}$, $Co^{2+}$, $Co^{3+}$, $Ni^{2+}$, and $Zn^{2+}$.

The azomethine metal complex pigment is preferably at least one member selected from the group consisting of C.I. Pigment Yellow 117, C.I. Pigment Yellow 129, C.I. Pigment Yellow 150 and C.I. Pigment Yellow 153.

The azomethine metal complex pigment is preferably a metal complex pigment having a cyclic azomethine compound represented by the formula (10) or a tautomer thereof as a ligand. The tautomer is a compound having a structure which can be formed by the shift of one hydrogen atom in the molecule.

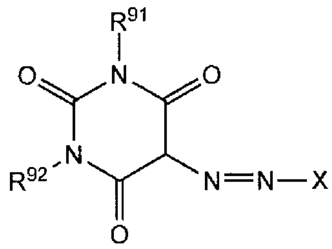

(10)

[In the formula (10), X represents a monovalent aromatic hydrocarbon group having 6 to 20 carbon atoms, or a group having a nitrogen-containing five or six-membered heterocycle, and $R^{91}$ and $R^{92}$ each independently represent a hydrogen atom, a monovalent hydrocarbon group having 1 to 5 carbon atoms or a sulfonic acid group ($-SO_3H$).]

Examples of the monovalent aromatic hydrocarbon group having 6 to 20 carbon atoms represented by X include a phenyl group, a naphthyl group, a benzyl group, and a phenoxyethyl group.

Examples of the group having the nitrogen-containing five or six-membered heterocycle represented by X include a pyrrolidyl group, a pyrrolyl group, a piperidyl group, a pyridyl group, an imidazolyl group, a pyrazolyl group, an oxazolyl group, a morpholino group, a pyrimidyl group, and a pyrazyl group.

Examples of the monovalent hydrocarbon group having 1 to 5 carbon atoms represented by $R^{91}$ and $R^{92}$ include a methyl group, an ethyl group, a propyl group, a butyl group, and a pentyl group.

The azomethine metal complex pigment is preferably a metal complex pigment having a structure represented by the formula (11), or a tautomer thereof.

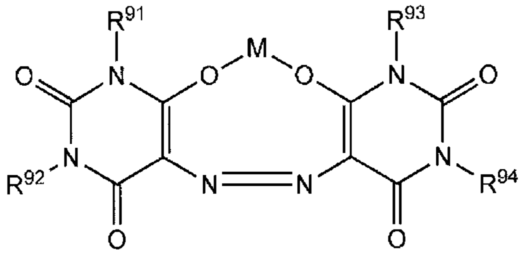

(11)

[In the formula (11), M represents Fe, Co, Ni or Zn that is a divalent or trivalent metal ion, and $R^{91}$ to $R^{94}$ each independently represent a hydrogen atom, a monovalent hydrocarbon group having 1 to 5 carbon atoms or a sulfonic acid group ($-SO_3H$).]

Examples of the monovalent hydrocarbon group having 1 to 5 carbon atoms represented by $R^{91}$ to $R^{94}$ include a methyl group, an ethyl group, a propyl group, a butyl group, and a pentyl group.

The M is more preferably the divalent or trivalent metal ion selected from the group consisting of $Fe^{2+}$, $Fe^{3+}{}_{2/3}$, $Co^{2+}$, $Co^{3+}{}_{2/3}$, $Ni^{2+}$ and $Zn^{2+}$.

Among the azomethine metal complex pigment, an azobarbituric acid-nickel complex pigment represented by the formula (12), i.e. Pigment Yellow 150, is more preferable, from the viewpoint of the storage stability and maintainability.

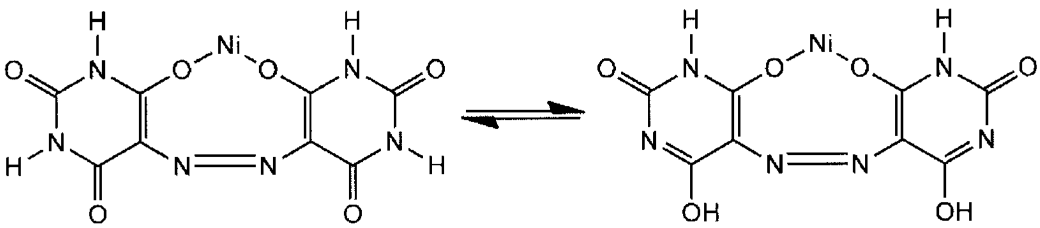

(12)

The acetoacetarylide pigment has a structure (the formula 13) derived from acetoacetic acid arylide in the molecule. The acetoacetarylide pigment also includes a condensed azo pigment synthesized by condensing the acetoacetarylide pigment.

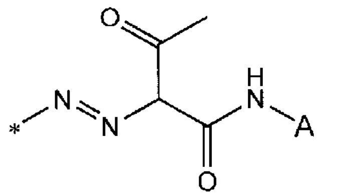

(13)

[In the formula (13), A represents a phenyl group optionally having a substituent group, or a benzimidazolone ring, and * represents a bonding site.]

Examples of the acetoacetarylide pigment include a Hansa pigment such as C.I. Pigment Yellow 1, 2, 3, 5, 6, 49, 63, 65, 73, 74, 75, 87, 90, 97, 98, 106, 111, 114, 116, 121, 124, 126, 127, 130, 136, 152, 165, 167, 174 and 176; a monoazo pigment such as a benzimidazolone pigment, e.g. C.I. Pigment Yellow 120, 151, 154, 156, 175, 181 and 194; a dicyclobenzidine pigment such as C.I. Pigment Yellow 12, 13, 14, 17, 55 and 83; a benzimidazolone pigment such as C.I. Pigment Yellow 180; a disazo pigment such as C.I. Pigment Yellow 81, 113, 170, 171, 172, 188 and 214; and a condensed azo pigment such as C.I. Pigment Yellow 93, 94, 95, 128, 155 and 166.

The pyrazolone pigment uses a pyrazolone-based compound in the synthesis material, and thus has a structure (the formula (14)) derived from the pyrazolone-based compound in the molecule. Examples of the pyrazolone pigment include C.I. Pigment Yellow 10 and 60.

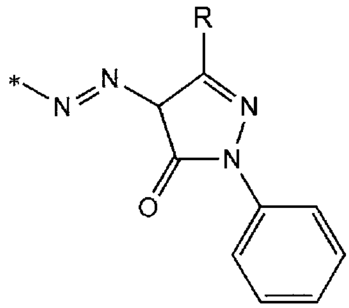

(14)

[In the formula (14), R represents a methyl group or an ethoxycarbonyl group, and * represents a bonding site.]

The yellow azo pigment is preferably an insoluble azo pigment. If the yellow azo pigment is the insoluble azo pigment that is insoluble in water, the effect of the present invention is further exerted.

In addition, among the insoluble azo pigment, at least one member selected from the group consisting of the azomethine metal complex pigment and the acetoacetarylide pigment is more preferable. These yellow azo pigments have the specific structure, and hence have a higher affinity with the block copolymer and a further enhanced dispersion stability. In addition, among them, the azomethine metal complex pigment is a yellow pigment having a high weather resistance, and thus is particularly preferable.

The amount of the yellow azo pigment in the coloring composition can be appropriately adjusted according to the applications, and is preferably 2 mass % or more, more preferably 5 mass % or more, and even more preferably 10 mass % or more, and is preferably 80 mass % or less, more preferably 60 mass % or less, and even more preferably 40 mass % or less in the total amount of the solid components of the coloring composition. If the amount of the yellow azo pigment falls within the above range, a sufficient coloring concentration can be provided to the recording medium when the coloring composition is used in the ink. Herein, the solid component is the component other than the dispersion medium which will be described later.

The coloring composition according to the present invention may contain other yellow coloring material than the yellow azo pigment, as long as the effect of the present invention is not impaired.

Examples of the other yellow coloring material include a yellow disperse dye such as C.I. Disperse Yellow 9, 23, 33, 42, 49, 54, 58, 60, 64, 66, 71, 76, 79, 83, 86, 90, 93, 99, 114, 116, 119, 122, 126, 149, 160, 163, 165, 180, 183, 186, 198, 200, 211, 224, 226, 227, 231, 237.

When the coloring composition contains the other yellow coloring material, the amount of the other yellow coloring material preferably ranges from 1 part by mass to 50 parts by mass with respect to 100 parts by mass of the yellow azo pigment.

The yellow azo pigment and the other yellow coloring material may contain a pigment derivative (synergist) as a dispersing aid. This will further enhance the dispersibility of the coloring material. The pigment derivative is a compound having an acidic group such as a sulfonic acid group, a carboxy group or a phosphoric acid group; a neutral group such as a phenyl group or a phthalimide alkyl; or the like bonding to an organic pigment residue. The organic pigment residue is a substituent group having an organic pigment structure (pigment skeleton), and preferably has a pigment skeleton same as

or similar to that of the organic coloring material constituting the coloring composition, or a pigment skeleton same as or similar to that of a compound serving as a raw material for the organic coloring material. Examples of the pigment skeleton include an azomethine pigment derivative, an isoindolinone pigment derivative, an isoindoline pigment derivative, a benzimidazolone pigment derivative, an azo pigment skeleton, and an anthraquinone pigment skeleton. The amount of the pigment derivative is not particularly limited, and for example, preferably ranges from 0.5 part by mass to 5 parts by mass with respect to 100 parts by mass of the coloring material.

[Dispersant]

The coloring composition contains the neutralized product of the above-mentioned block copolymer as the dispersant. If the neutralized product of the block copolymer is used as the dispersant, a coloring composition having an excellent dispersion stability is obtained.

In the neutralized product of the block copolymer used as the dispersant, more than 50 mol % of the acidic group in 100 mol % of the acidic group included in the structural unit (a-2) is neutralized. If more than 50 mol % of the acidic group included in the structural unit (a-2) is neutralized, the affinity with the aqueous dispersion medium is higher.

In the neutralized product of the block copolymer, the proportion of the neutralized acidic group in 100 mol % of the acidic group included in the structural unit (a-2) is more than 50 mol %, and preferably 55 mol % or more. If more than 50 mol % of the acidic group included in the structural unit (a-2) is neutralized, a coloring composition having an excellent dispersion stability is obtained. It is noted that the neutralized product of the block copolymer may be a fully neutralized product in which all the acidic group included in the structural unit (a-2) is neutralized, or a partially neutralized product in which a part of the acidic group included in the structural unit (a-2) is neutralized. When the dispersant is the partially neutralized product of the block copolymer, the proportion of the neutralized acidic group in 100 mol % of the acidic group included in the structural unit (a-2) is preferably 95 mol % or less, and more preferably 80 mol % or less. If a part of the acidic group included in the structural unit (a-2) is not neutralized, the coloring material in the coloring composition tends to have further enhanced dispersion stability.

Examples of the component neutralizing the acidic group included in the structural unit (a-2) include at least one member selected from the group consisting of an alkali metal, an organic amine and ammonia, and at least one member selected from the group consisting of the alkali metal and the organic amine is preferable.

Examples of the alkali metal include lithium, sodium, and potassium.

Examples of the organic amine include an alkanol amine such as monoethanol amine, diethanol amine, triethanol amine, N-methyldiethanol amine, monopropanol amine, dipropanol amine, tripropanol amine, N-methylethanol amine, and 2-(dimethylamino) ethanol; and an alkylamine such as monomethylamine, dimethylamine, trimethylamine, monoethylamine, diethylamine, and triethylamine.

The amount of the dispersant in the coloring composition preferably ranges from 5 parts by mass to 200 parts by mass, more preferably ranges from 15 parts by mass to 100 parts by mass, and even more preferably ranges from 30 parts by mass to 80 parts by mass, with respect to 100 parts by mass of the yellow azo pigment.

[Dispersion medium]

The coloring composition contains the aqueous dispersion medium as a dispersion medium.

Examples of the aqueous dispersion medium include water, and an aqueous organic solvent (an organic solvent miscible with water). Examples of the water include pure water, and ion exchange water (deionized water). Examples of the aqueous organic solvent include an alcohol such as methanol, ethanol, n-propyl alcohol, isopropyl alcohol, n-butyl alcohol, sec-butyl alcohol, tert-butyl alcohol, 1-methoxy-2-propanol, and 1-butoxy-2-propanol; a polyhydric alcohol such as ethylene glycol, propylene glycol, butylene glycol, triethylene glycol, diethylene glycol, polyethylene glycol, polypropylene glycol, and glycerine; an ether such as tetrahydrofuran, dioxane, ethylene glycol methyl ether, ethylene glycol ethyl ether, diethylene glycol methyl ether, diethylene glycol ethyl ether, triethylene glycol, monomethyl ether, and monoethyl ether; a ketone such as acetone, methylethyl ketone, and isobutyl ketone; and an amide such as dimethylformaldehyde, and dimethylacetamide. The aqueous dispersion medium may be used solely, or at least two of them may be used in combination.

The amount of the aqueous dispersion medium in the coloring composition is not particularly limited, and can be appropriately adjusted. The upper limit of the amount of the aqueous dispersion medium in the coloring composition is generally 99 mass %. In addition, the lower limit of the amount of the aqueous dispersion medium in the coloring composition is generally 60 mass %, and preferably 80 mass % in consideration of the viscosity suitable for applying the coloring composition.

In addition, the amount of the aqueous organic solvent in the coloring composition is preferably 10 mass % or less, more preferably less than 3 mass %, even more preferably less than 1 mass %, and particularly preferably 0 mass %.

(Other additive)

In addition to the above coloring material, dispersant and aqueous dispersion medium, other additive can be added in the coloring composition according to the present invention, as long as the effect of the present invention is not impaired. Examples of the other additive include a surfactant, a defoaming agent, an antifungal agent, a preservative, an antirust agent, a chelating agent, a water-soluble ultraviolet light absorber, a water-soluble high molecular compound (excluding the above dispersant), a water-dispersible resin (excluding the above dispersant), and an antioxidant.
Examples of the surfactant include an anionic surfactant, a nonionic surfactant, a cationic surfactant, an ampholytic surfactant, a silicone surfactant, and a fluorine surfactant.
Examples of the anionic surfactant include alkylsulfocarboxylate, $\alpha$-olefin sulfonate, polyoxyethylene alkylether acetate, polyoxyethylene alkylether sulfate, polyoxyethylene dinonylphenylether sulfate, polyoxyethylene laurylether sulfate, N-acylamino acid or a salt thereof, N-acylmethyltaurate, alkylsulfate polyoxyalkylether sulfate, alkylsulfate polyoxyethylene alkylether phosphate, rosin acid soap, castor oil sulfuric acid ester salt, laurylalcohol sulfuric acid ester salt, alkylphenol type phosphorate, alkyl type phosphorate, alkylarylsulfonate, diethylsulfosuccinate, diethylhexylsulfosuccinate, and dioctylsulfosuccinate. Among them, polyoxyethylene dinonylphenylether sulfate, polyoxyethylene laurylether sulfate, or dioctylsulfosuccinate is preferable.
Examples of the nonionic surfactant include an ether such as polyoxyethylene nonylphenyl ether, polyoxyethylene octylphenyl ether, polyoxyethylene dodecylphenyl ether, polyoxyethylene oleyl ether, polyoxyethylene lauryl ether, polyoxyethylene alkyl ether, polyoxyethylene acetylene glycol ether, and polyoxyethylene distyrenated phenyl ether; an ester such as polyoxyethylene oleate, polyoxyethylene distearate, sorbitan laurate, sorbitan monostearate, sorbitan mono oleate, sorbitan sesquioleate, polyoxyethylene monooleate, and polyoxyethylene stearate; and an acetylene glycol (alcohol) such as 2,4,7,9-tetramethyl-5-decyne-4,7-diol, 3,6-dimethyl-4-octine-3,6-diol, and 3,5-dimethyl-1-hexyne-3-ol. Among them, SURFYNOL, polyoxyethylene acetylene glycol ether, or polyoxyethylene distyrenated phenyl ether is preferable.
Examples of the cationic surfactant include a 2-vinyl pyridine derivative and a poly 4-vinyl pyridine derivative.
Examples of the ampholytic surfactant include betaine lauryldimethylamino acetate, 2-alkyl-N-carboxymethyl-N-hydroxyethyl imidazolinium betaine, betaine coconut oil fatty acid amide propyldimethylamino acetate, polyoctylpolyaminoethyl glycine, and an imidazoline derivative.
Examples of the silicone surfactant include a polyether-modified siloxane, and a polyether-modified polydimethylsiloxane.
Examples of the fluorine surfactant include a perfluoroalkylsulfonic acid compound, a perfluoroalkylcarboxylic acid compound, a perfluoroalkylphosphate compound, a perfluoroalkylethylene oxide addition product, and a polyoxyalkylene ether polymer compound having a perfluoroalkylether group on the side chain.
Examples of the defoaming agent include a silicone defoaming agent, a silica mineral oil defoaming agent, an olefin defoaming agent, and an acetylene defoaming agent.
Examples of the antifungal agent include sodium dehydroacetate, benzoate sodium, sodium pyridinethione-1-oxide, ethyl p-hydroxybenzoate, 1,2-benzisothiazoline-3-one and a salt thereof.
Examples of the preservative include an organic sulfur compound, an organic nitrogen sulfur compound, an organic halogen compound, a haloarylsulfone compound, an iodopropargyl compound, a haloalkylthio compound, a nitrile compound, a pyridine compound, an 8-oxyquinoline compound, a benzothiazole compound, an isothiazoline compound, a dithiol compound, a pyridine oxide compound, a nitropropane compound, an organic tin compound, a phenol compound, a quaternary ammonium salt compound, a triazine compound, a thiazine compound, an anilide compound, an adamantane compound, a dithiocarbamate compound, a brominated indanone compound, a benzylbromide acetate compound, and an inorganic salt compound. Specific examples of the organic halogen compound include sodium pentachlorophenate. Specific examples of the pyridine oxide compound include sodium 2-pyridinethiol-1-oxide. Specific examples of the isothiazoline compound include 1,2-benzisothiazoline-3-one, 2-n-octyl-4-isothiazoline-3-one, 5-chloro-2-methyl-4-isothiazoline-3-one, 5-chloro-2-methyl-4-isothiazoline-3-one magnesium chloride, 5-chloro-2-methyl-4-isothiazoline-3-one calcium chloride, and 2-methyl-4-isothiazoline-3-one calcium chloride.
Examples of the antirust agent include acidic sulfite, sodium thiosulfate, ammonium thioglycolate, diisopropylammonium nitrite, pentaerythritol tetranitrate, and dicyclohexylammonium nitrite.
Examples of the chelating agent include disodium ethylenediamine tetraacetate, sodium nitrile triacetate, sodium hydroxyethyl ethylenediamine triacetate, sodium diethylenetriamine pentaacetate, and sodium uracil diacetate.
Examples of the water-soluble ultraviolet light absorber include a sulfonated benzophenone compound, a benzotriazole compound, a salicylic acid compound, a cinnamic acid compound, and a triazine compound.
The water-soluble high molecular compound (excluding the above dispersant) is not particularly limited as long as it is a high molecular compound soluble in water, and is preferably an anionic high molecular compound or a nonionic high molecular compound from the viewpoint of the dispersion stability. Examples of the anionic high molecular compound include a cellulose derivative such as carboxymethyl cellulose, an acrylic acid derivative such as polyacrylic acid, and a

polystyrene derivative such as polystyrene sulfonate. Examples of the nonionic high molecular compound include polyethylene glycol, polyvinyl alcohol, polyvinyl pyrrolidone, and gelatin.

The water-dispersible resin (excluding the above dispersant) has a function of fixing the coloring material in the coloring composition to the recorded material by forming a film at normal temperature. The resin used in the water-dispersible resin is not particularly limited, and examples thereof include a urethane resin, a polyester resin, an acrylic resin, a vinyl acetate resin, a vinyl chloride resin, an acrylic-styrene resin, an acrylic-silicone resin, and a styrene-butadiene resin.

As the antioxidant, various organic fading inhibitors and metal complex fading inhibitors can be used. Examples of the organic fading inhibitor include hydroquinones, alkoxy phenols, dialkoxy phenols, phenols, anilines, amines, indans, chromans, alkoxyanilines, and heterocycles.

When the coloring composition according to the present invention is used in the inkjet recording, the amount of the inorganic impurity such as a chloride (e.g., sodium chloride) or sulfate (e.g., sodium sulfate) of a metal cation in the coloring composition is preferably low. The inorganic impurity is often mixed in the raw powder of the coloring material, and thus the raw powder is preferably purified where necessary. As a rough standard, the amount of the inorganic impurity is about 1% or less with respect to the total mass of the coloring material, and the lower limit thereof can be the detection limit or less of the analytical instrument. That is, the lower limit can be 0%. The inorganic impurity may be removed from the coloring material by a desalination treatment using, for example, a method of stirring a dry product or wet cake of the pigment in a suitable water-soluble solvent (e.g., an alcohol having 1 to 4 carbon atoms, such as methanol) or where necessary a mixed solvent of a water-soluble organic solvent and water, filtering and separating the precipitate and drying it; or a method of exchanging and absorbing the inorganic impurity with an ion exchange resin.

The pH of the coloring composition according to the present invention generally ranges from 7 to 11, and preferably ranges from 8 to 10, for the purpose of improving the storage stability and in light of the compatibility with the inkjet printer member. Further, the surface tension of the coloring composition generally ranges from 10 mN/m to 50 mN/m, and preferably ranges from 20 mN/m to 40 mN/m. In addition, the viscosity (25 °C) of the coloring composition generally ranges from 2 mPa·s to 30 mPa·s, and preferably ranges from 3 mPa·s to 20 mPa·s.

[Production method of coloring composition]

Examples of the production method of the coloring composition containing the yellow azo pigment, the dispersant and the aqueous dispersion medium include a production method (embodiment 1) comprising a step of producing the neutralized product of the block copolymer, and a step of mixing the neutralized product of the block copolymer, the yellow azo pigment, and the aqueous dispersion medium; and a production method (embodiment 2) comprising a step of mixing the yellow azo pigment, the block copolymer, a neutralizing agent, and the aqueous dispersion medium.

Examples of the method of producing the neutralized product of the block copolymer include a method (method 1) of using a monomer having a neutralized acidic group when polymerizing the block copolymer; and a method (method 2) of mixing the block copolymer and the neutralizing agent.

The monomer used in the method 1 is not particularly limited, as long as it is a monomer capable of forming a structural unit having a neutralized acidic group. In addition, examples of the neutralizing component of the acidic group include an alkali metal, an organic amine, and ammonia.

Examples of the monomer capable of forming the structural unit having the neutralized acidic group include a compound obtained by neutralizing the acidic group of the above-mentioned monomer for forming the structural unit (a-2) with an alkali metal, an organic amine or ammonia.

(Neutralizing agent)

As the neutralizing agent used in the method 2 of the embodiment 1 of the above production method or the embodiment 2 of the above production method, a compound that can neutralize the acidic group included in the structural unit (a-2) of the block copolymer can be used. The amount of the neutralizing agent is adjusted such that the acidic group included in the structural unit (a-2) of the block copolymer has a neutralization degree of more than 50 mol %.

Examples of the neutralizing agent include a compound having an alkali metal, an organic amine, and ammonia.

Examples of the compound having the alkali metal include an alkali metal hydroxide such as lithium hydroxide, sodium hydroxide and potassium hydroxide; an alkali metal carbonate such as lithium carbonate, sodium carbonate, sodium hydrogen carbonate and potassium carbonate; and an alkali metal salt of an organic acid such as sodium silicate, and potassium acetate.

Examples of the organic amine include an alkanol amine such as monoethanol amine, diethanol amine, triethanol amine, N-methyldiethanol amine, monopropanol amine, dipropanol amine, tripropanol amine, N-methylethanol amine, and 2-(dimethylamino) ethanol; and an alkylamine such as monomethylamine, dimethylamine, trimethylamine, monoethylamine, diethylamine, and triethylamine.

In the production method, the method of mixing the yellow azo pigment, the block copolymer, the neutralizing agent and the aqueous dispersion medium is not particularly limited, and for example, a mixing disperser such as a paint shaker, a bead mill, a ball mill, a dissolver and a kneader can be used.

It is noted that the yellow azo pigment, the block copolymer, the neutralizing agent, and the aqueous dispersion medium may be mixed all at once or mixed separately. For example, it is possible to mix the block copolymer, the neutralizing agent and the aqueous dispersion medium, and then mix the mixture with the yellow azo pigment. In addition, it is also possible to mix the block copolymer, one part of the neutralizing agent and the aqueous dispersion medium, and then mix the mixture with the remaining neutralizing agent and the yellow azo pigment.

The coloring composition contains the dispersant, the coloring material and the aqueous dispersion medium, and further the other additive that is added where necessary. The coloring composition is preferably filtered after the mixing.

The number average particle size of the coloring material in the coloring composition is generally 200 nm or less, preferably ranges from 50 nm to 200 nm, more preferably ranges from 70 nm to 170 nm, and even more preferably ranges from 80 nm to 130 nm, from the viewpoint of the storage stability and discharging performance of the coloring composition. If the average particle size of the coloring material is 200 nm or less, the dispersion is further stabilized. In addition, if the average particle size of the coloring material is 50 nm or more, the coloring material has a better stability, and the ink has a further enhanced storage stability.

The coloring composition can be used in various fields. Examples of the application include writing, printing, information recording, and textile printing. In particular, the coloring composition can be suitably used in the inkjet recording method in the printing, information recording or textile printing.

<Colored matter>

The colored matter of the present invention means a substance that is colored by the coloring composition. The material of the colored matter is not particularly limited, as long as the colored matter is a substance that is colored by the coloring composition. Examples of the colored matter include a colored matter (recorded material) colored by the inkjet recording method described later.

<Inkjet recording method>

The inkjet recording method of the present invention is a method of conducting a recording by discharging droplets of the coloring composition (hereinafter sometime referred to as "inkjet ink" or "ink") based on the recording signal, and adhering the discharged droplets to the recorded material. The ink nozzle or the like used when conducting the recording is not particularly limited, and can be appropriately selected depending on the purpose.

As the mode used in the recording method, any conventionally known mode can be adopted, for example, an electric charge control mode that utilizes electrostatic attraction to discharge the ink; a Drop-On-Demand mode (pressure pulse mode) that utilizes a vibrational pressure of a piezo element; an acoustic inkjet mode that converts an electrical signal to an acoustic beam to irradiate the ink, and utilizes the radiation pressure to discharge the ink; and a thermal inkjet, i.e. Bubble Jet (registered trademark) mode that heats the ink to generate bubbles, and utilizes the generated pressure. In addition, the mode used in the recording method also includes a mode that injects a plurality of inks containing a small amount of the coloring material, referred to as a photo ink or the like, in a small volume; and a mode that combines a plurality of inks with substantially the same hue and different pigment concentrations to improve the image quality.

The recorded material is not particularly limited, and examples thereof include an information recording sheet such as paper and film; a non-woven fabric constituted by a fiber such as cotton, viscose rayon, Polynosic, Cupra, polyester, nylon, wool, and silk; a (woven or knitted) fabric constituted by a (twisted or untwisted) yarn made from the aforementioned fiber; a leather; and a color filter base material. Among them, the information recording sheet is preferable.

Examples of the information recording sheet include a sheet having an ink receiving layer provided on a base material such as paper, synthesis paper and film. The ink receiving layer is provided, for example, by a method of impregnating or coating the base material with a cationic polymer; or a method of coating inorganic fine particles such as porous silica, alumina sol and special ceramics together with a hydrophilic polymer such as polyvinyl alcohol and polyvinyl pyrrolidone on the surface of the base material. The sheet provided with such the ink receiving layer is generally referred to as an inkjet-specific paper, inkjet-specific film, glossy paper, glossy film, or the like. These sheets have high surface glossiness and excellent water proofness, and thus are suitable for the recording of photographic images.

Examples of the information transmission sheet without the ink receiving layer include various types of paper such as coated paper and art paper used for gravure printing and offset printing applications; and cast coated paper used for label printing applications.

When the information transmission sheet without the ink receiving layer is used, a surface modification treatment is preferably conducted. As the surface modification treatment, a conventionally known surface modification treatment

selected from corona discharge treatment, plasma treatment and frame treatment is preferable.

<Inkjet printer>

The inkjet printer of the present invention is an inkjet printer loaded with a container that accommodates the coloring composition. The inkjet printer comprises a recording head that discharges the ink (the coloring composition) to record images, and a container for accommodating the ink, and the container is equipped with a supply means that supplies the ink to the recording head. The inkjet printer further comprises a control device from which the recording signal is sent to the recording head to conduct the recording operation. When recording on the recorded material by the inkjet recording method, for example, the inkjet printer loaded with the container that accommodates the coloring composition is used. The container that accommodates the coloring composition is loaded at a predetermined position of the inkjet printer.

The coloring composition can be used as a yellow ink, and also can be combined with a black ink, a cyan ink and a magenta ink to constitute an ink set with four inks that enable a full color recording. The ink set is an ink set in which at least one ink among the four inks is the ink composition. In addition, inks with various colors such as green, blue (or violet) and red (or orange) can be further used in combination in the ink set where necessary to express a richer color or the like. Each of the inks with various colors is poured into its respective container, and each container is loaded to the predetermined position of the inkjet printer to conduct the inkjet recording.

When the coloring composition according to the present invention is recorded on an inkjet-specific paper or even on a regular paper, a printed material with a high print density, a good durability such as water proofness, light fastness and scratch resistance, a high quality and an excellent image stability, is obtained. Furthermore, even if the type of paper is changed, a printed material having a high color stability with little hue change is obtained.

## EXAMPLES

The present invention will be further explained in detail by way of specific examples. The present invention is not limited to the following examples, and can be appropriately changed and implemented without departing from the spirit of the present invention. It is noted that the polymerization ratio, the weight average molecular weight (Mw), molecular weight distribution (Mw/Mn) and acid value of the copolymer, and the viscosity and particle size of the coloring composition were evaluated by the following methods.

It is noted that the abbreviations have the following meanings.

VP: N-vinyl-2-pyrrolidone
CHA: cyclohexyl acrylate
BA: n-butyl acrylate
BzA: benzyl acrylate
M11EGA: polyethylene glycol (degree of polymerization = 11) methyl ether acrylate (KOMERATE-A040TT available from Green Chemical Co., Ltd.)
M3EGA: methoxytriethylene glycol acrylate
AA: acrylic acid
ATBSNa: sodium acrylamide tert-butylsulfonate
MA: methyl acrylate
BTEE: ethyl=2-methyl-2-n-butyltellanyl-propionate
AIBN: 2,2'-azo bis(isobutyronitrile)
DIW: ultrapure water
MeOH: methanol
MP: 1-methoxy-2-propanol
KOH: potassium hydroxide
DMAE: dimethylamino ethanol

[Evaluation method]

(Polymerization ratio)

A nuclear magnetic resonance (NMR) measurement apparatus (model: AVANCE500 (frequency: 500 MHz) available from Bruker BioSpin Corp.) was used to measure $^1$H-NMR (solvent: $CDCl_3$, Internal standard: TMS). The integral ratio of the peak derived from the monomer to the peak derived from the polymer was obtained based on the obtained NMR spectrum to calculate the polymerization ratio of the monomer.

(Weight average molecular weight (Mw) and molecular weight distribution (Mw/Mn))

The weight average molecular weight (Mw) and the molecular weight distribution (Mw/Mn) were obtained with a high performance liquid chromatograph (model: HLC8320 available from Tosoh Corporation) by gel permeation chromatography (GPC). One SHODEX KF-603 (Φ 6.0mm × 150mm) (available from SHODEX Corporation) was used as the column, lithium bromide (30 mmol/L) - acetic acid (30 mmol/L) - N-methylpyrrolidone was used as the mobile phase, and a differential refractometer was used as the detector. The measuring conditions were as follows. The column temperature was 40 °C, the sample concentration was 100 mg/mL, the sample injection amount was 10 μL, and the flow rate was 0.2 mL/min. The polystyrenes (molecular weight: 705,000, 37,900, 19,920, 10,200, 4,910, 2,630, and 1,150) were used as standard substances to create a calibration curve, and Mw and Mn were measured. The molecular weight distribution (Mw/Mn) was calculated based on these measured values.

(Acid value)

The acid value is a value representing a mass of KOH required to neutralize the acidic component of 1g of the solid component. The measuring sample was dissolved in tetrahydrofuran, a few drops of a 1.0 w/v% phenolphthalein ethanol (90) solution was added as an indicator in the obtained solution, and the mixture was neutralized and titrated with a KOH (0.1 mol/L) - 2-propanol solution. A point where a slight redness remains was taken as the endpoint of the titration, and the acid value was calculated according to the following formula.

$$A = 56.11 \times Vs \times 0.1 \times f/w$$

A: acid value (mgKOH/g)
Vs: amount (mL) of KOH (0.1 mol/L) - 2-propanol solution required for titration
f: titer of KOH (0.1 mol/L) - 2-propanol solution
w: mass (g) of measuring sample (Converted to solid component)

(Viscosity)

An E-type viscometer (trade name: RE-80L available from Toki Sangyo Co., Ltd.) and a cone rotor (0.8° × R24) were used to measure the viscosity (mPa·s) at a rotor rotational speed of 12 rpm and a temperature of 25 °C. The viscosity of the coloring composition immediately after the preparation and the viscosity of the coloring composition stored at a temperature of 40 °C for one week were measured.

It is noted that the rotor rotational speed was changed to 6 rpm for the coloring compositions No. 3 (stored at the temperature of 40 °C for one week) and No. 20 (immediately after the preparation); the rotor rotational speed was changed to 3 rpm for the coloring compositions No. 3 (immediately after the preparation), No. 6 (immediately after the preparation, and stored at the temperature of 40 °C for one week) and No. 13 (immediately after the preparation); the rotor rotational speed was changed to 1.5 rpm for the coloring composition No. 14 (immediately after the preparation); the rotor rotational speed was changed to 0.6 rpm for the coloring composition No. 12 (stored at the temperature of 40 °C for one week); and the rotor rotational speed was changed to 0.3 rpm for the coloring composition No. 21 (immediately after the preparation).

(Particle size)

The particle size was measured with a thick particle size analyzer (trade name: FPAR-1000 available from Otsuka Electronics Co., Ltd.) at a temperature of 25 °C. The sample was diluted with DIW where necessary. The particle size of the coloring composition immediately after the preparation, and the particle size of the coloring composition stored at a temperature of 40 °C for one week after the preparation were measured.

<Synthesis of copolymer>

(Copolymer No. 1)

In a flask provided with an argon gas introducing tube and a stirrer, 3.9 g of VP, 0.6 g of CHA, 0.01 g of AIBN and 4.5 g of DIW were charged, and after nitrogen replacement, 0.45 g of BTEE was added and the mixture was reacted at a temperature of 55 °C for 7 hours to polymerize the B block. The polymerization ratio was 95.5%.

In the reaction solution, a mixed solution of 3.0 g of M11EGA, 1.5 g of AA, 6.0 g of MA, 0.02 g of AIBN and 10.0 g of MeOH that had been replaced by argon in advance was added, and the mixture was reacted at a temperature of 55 °C for

20 hours to polymerize the A block. The polymerization ratio was 95.5%.

After the reaction was completed, the reaction liquid was poured into n-heptane that was under stirring. The precipitated polymer was filtered by suction filtration and dried to obtain the copolymer No. 1. The obtained copolymer No. 1 had Mw of 7038, Mw/Mn of 1.37 and an acid value of 93 mgKOH/g.

(Copolymers No. 2 to 12)

The copolymers No. 2 to 12 were produced by the same method as the production method of the copolymer No. 1. Table 1 shows the used monomer, organic tellurium compound, azo polymerization initiator and solvent, the reaction condition, and the polymerization ratio.

In addition, Tables 2 and 3 show the formulation, Mw, Mw/Mn and acid value of each copolymer. It is noted that the amount of each structural unit in the copolymer was calculated based on the charging ratio of the monomers used in the polymerization reaction and the polymerization ratio.

<Synthesis of neutralized product of copolymer>

(Neutralized product of copolymers No.13 and 14)

The neutralized products of the copolymers No.13 and 14 were produced by the same method as the production method of the copolymer No. 1. Table 1 shows the used monomer, organic tellurium compound, azo polymerization initiator and solvent, the reaction condition, and the polymerization ratio. It is noted that the monomers were added such that the copolymer before the neutralization had an acid value of 80 mgKOH/g.

In addition, Table 3 shows the formulation, Mw and Mw/Mn of each copolymer. The amount of each structural unit in the copolymer was a value calculated based on the charging ratio of the monomers used in the polymerization reaction and the polymerization ratio, and the amount of the structural unit derived from sodium acrylamide tert-butylsulfonate was calculated by converting it to the amount of the structural unit derived from acrylamide tert-butylsulfonic acid. It is noted that Mw and Mw/Mn of the neutralized products of the copolymers No.13 and 14 in Table 3 were measured values of the neutralized products of the copolymers.

Table 1-1

| Copolymer No./Neutralized product of copolymer No.[Note] | | | | | 1 | 2 | 3 | 4 | 5 | 6 | 7 |
|---|---|---|---|---|---|---|---|---|---|---|---|
| B block production step | Formulation (g) | Monomer | | VP | 3.9 | 3.3 | 3.3 | 3.3 | 3.9 | 4.5 | 3.9 |
| | | | | CHA | 0.6 | 1.2 | 1.2 | - | 0.6 | - | 0.6 |
| | | | | BA | - | - | - | 1.3 | - | - | - |
| | | | | BzA | - | - | - | - | - | - | - |
| | | Organotellurium compound | | BTEE | 0.45 | 0.45 | 0.45 | 0.45 | 0.45 | 0.45 | 0.45 |
| | | Azo polymerization initiator | | AIBN | 0.01 | 0.01 | 0.01 | 0.01 | 0.01 | 0.05 | 0.02 |
| | | Solvent | | DIW | 4.5 | 4.5 | 4.5 | 4.6 | 4.5 | - | - |
| | | | | MeOH | - | - | - | - | - | - | 4.5 |
| | | | | MP | - | - | - | - | - | 3.0 | - |
| | Reaction temperature (°C) | | | | 55 | 55 | 55 | 55 | 55 | 60 | 55 |
| | Reaction time (hour) | | | | 7 | 7 | 6 | 8 | 10 | 22 | 18 |
| | Polymerization ratio (%) | | | | 95.5 | 94.7 | 98.3 | 98.8 | 99.9 | 96.4 | 99.2 |
| A block production step | Formulation (g) | Monomer | | M11EGA | 3.0 | 3.0 | 6.0 | 3.0 | 3.0 | - | - |
| | | | | M3EGA | - | - | - | - | - | - | - |
| | | | | AA | 1.5 | 1.5 | 1.5 | 1.5 | 3.1 | 1.5 | 1.5 |
| | | | | ATBSNa | - | - | - | - | - | - | - |
| | | | | MA | 6.0 | 6.0 | 3.0 | 6.0 | 4.4 | 9.0 | 9.0 |
| | | Azo polymerization initiator | | AIBN | 0.02 | 0.02 | 0.02 | 0.02 | 0.02 | 0.03 | 0.02 |
| | | Solvent | | DIW | - | - | - | - | - | - | - |
| | | | | MeOH | 10.0 | 10.0 | 10.0 | 10.2 | 10.0 | - | 10.5 |
| | | | | MP | - | - | - | - | - | 3.4 | - |
| | Reaction temperature (°C) | | | | 55 | 55 | 55 | 55 | 55 | 60 | 55 |
| | Reaction time (hour) | | | | 20 | 21 | 72 | 40 | 42 | 47 | 21 |
| | Polymerization ratio (%) | | | | 95.5 | 95.1 | 95.0 | 99.6 | 90.6 | 96.2 | 94.3 |

Note) No. 1 to 12 are copolymers, and No. 13 to 14 are neutralized products of copolymers.

Table 1-2

| Copolymer No./Neutralized product of copolymer No.[Note] | | | | | 8 | 9 | 10 | 11 | 12 | 13 | 14 |
|---|---|---|---|---|---|---|---|---|---|---|---|
| B block production step | Formulation (g) | Monomer | | VP | 4.5 | 4.5 | 3.9 | 3.3 | 2.3 | 3.9 | 4.5 |
| | | | | CHA | - | - | 0.6 | - | 2.2 | 0.6 | - |
| | | | | BA | - | - | - | - | - | - | - |
| | | | | BzA | - | - | - | 1.3 | - | - | - |
| | | Organotellurium compound | | BTEE | 0.45 | 0.45 | 0.45 | 0.45 | 0.45 | 0.45 | 0.45 |
| | | Azo polymerization initiator | | AIBN | 0.01 | 0.01 | 0.01 | 0.01 | 0.02 | 0.01 | 0.01 |
| | | Solvent | | DIW | 4.5 | 4.5 | 4.5 | 4.6 | - | 4.5 | - |
| | | | | MeOH | - | - | - | - | 4.7 | - | 4.5 |
| | | | | MP | - | - | - | - | - | - | - |
| | Reaction temperature (°C) | | | | 55 | 55 | 55 | 55 | 55 | 55 | 55 |
| | Reaction time (hour) | | | | 6 | 33 | 8 | 6 | 23 | 17 | 23 |
| | Polymerization ratio (%) | | | | 97.0 | 100.0 | 99.9 | 98.4 | 98.0 | 97.9 | 95.7 |
| A block production step | Formulation (g) | Monomer | | M11EGA | 3.0 | - | 3.0 | 3.0 | 3.0 | 3.0 | 3.0 |
| | | | | M3EGA | - | 3.0 | - | - | - | - | - |
| | | | | AA | 1.5 | 1.5 | 0.8 | 1.5 | 1.5 | - | - |
| | | | | ATBSNa | - | - | - | - | - | 4.9 | 4.9 |
| | | | | MA | 6.0 | 6.0 | 6.7 | 6.0 | 6.0 | 3.1 | 3.0 |
| | | Azo polymerization initiator | | AIBN | 0.03 | 0.03 | 0.02 | 0.02 | 0.02 | 0.03 | 0.03 |
| | | Solvent | | DIW | - | - | - | - | - | 4.9 | 4.9 |
| | | | | MeOH | 5.7 | 5.6 | 10.0 | 10.2 | 10.1 | 8.7 | 8.7 |
| | | | | MP | - | - | - | - | - | - | - |
| | Reaction temperature (°C) | | | | 55 | 55 | 55 | 55 | 55 | 55 | 55 |
| | Reaction time (hour) | | | | 34 | 23 | 14 | 36 | 54 | 44 | 41 |
| | Polymerization ratio (%) | | | | 95.4 | 97.5 | 99.6 | 96.9 | 96.9 | 97.3 | 100 |

Note) No. 1 to 12 are copolymers, and No. 13 to 14 are neutralized products of copolymers.

Table 2

| Copolymer No. | | | 1 | 2 | 3 | 4 | 5 | 6 | 7 |
|---|---|---|---|---|---|---|---|---|---|
| Formulation | A block | Formulation | M11EGA/AA/MA/residual B monomer | M11EGA/AA/MA/residual B monomer | M11EGA/AA/MA/residual B monomer | M11EGA/AA/MA/residual B monomer | M11EGA/AA/MA/residual B monomer | AA/MA/residual B monomer | AA/MA/residual B monomer |
| | | Amount of structural unit (a-1) (mass %) | 27.9 | 27.8 | 56.5 | 28.3 | 28.4 | 0.0 | 0.0 |
| | | Amount of structural unit (a-2) (mass %) | 14.4 | 14.4 | 14.6 | 14.6 | 29.3 | 14.4 | 14.6 |
| | B block | Formulation | VP/CHA | VP/CHA | VP/CHA | VP/BA | VP/CHA | VP | VP/CHA |
| | | Amount of structural unit (b-1) (mass %) | 86.6 | 73.3 | 73.3 | 72.3 | 86.7 | 100.0 | 86.6 |
| | | Amount of structural unit (b-2) (mass %) | 13.4 | 26.7 | 26.7 | 27.7 | 13.3 | 0.0 | 13.4 |
| | Mass ratio (A block/B block) | | 70.4/29.6 | 70.5/29.5 | 69.4/30.6 | 70.0/30.0 | 68.0/32.0 | 70.3/29.7 | 69.0/31.0 |
| Properties | Weight average molecular weight (Mw) | | 7038 | 9115 | 10675 | 7323 | 9094 | 6273 | 6917 |
| | Molecular weight distribution (Mw/Mn) | | 1.37 | 1.65 | 1.33 | 1.20 | 1.14 | 1.46 | 1.27 |
| | Acid value before neutralization (mgKOH/g) | | 93 | 94 | 78 | 102 | 157 | 78 | 85 |

Table 3

| Copolymer No./Neutralized product of copolymer No.[Note] | | | 8 | 9 | 10 | 11 | 12 | 13 | 14 |
|---|---|---|---|---|---|---|---|---|---|
| Formulation | A block | Formulation | M11EGA/AA/MA/residual B monomer | M3EGA/AA/MA | M11EGA/AA/MA/residual B monomer | M11EGA/AA/MA/residual B monomer | M11EGA/AA/MA/residual B monomer | M11EGA/ATBSNa/MA/residual B monomer | M11EGA/ATBSNa/MA/residual B monomer |
| | | Amount of structural unit (a-1) (mass %) | 28.1 | 28.4 | 28.4 | 28.2 | 28.2 | 28.2 | 28.2 |
| | | Amount of structural unit (a-2) (mass %) | 14.5 | 14.6 | 7.4 | 14.6 | 14.6 | 41.7 | 41.7 |
| | B block | Formulation | VP | VP | VP/CHA | VP/BzA | VP/CHA | VP/CHA | VP |
| | | Amount of structural unit (b-1) (mass %) | 100.0 | 100.0 | 86.7 | 72.3 | 50.1 | 86.7 | 100.0 |
| | | Amount of structural unit (b-2) (mass %) | 0.0 | 0.0 | 13.3 | 0.0 | 49.9 | 13.3 | 0.0 |
| | Mass ratio (A block/B block) | | 69.9/30.1 | 69.4/30.6 | 70.0/30.0 | 69.5/30.5 | 69.9/30.1 | 70.1/29.9 | 71.2/28.8 |
| Properties | Weight average molecular weight (Mw) | | 7172 | 8285 | 9688 | 10884 | 8844 | 9350 | 9149 |
| | Molecular weight distribution (Mw/Mn) | | 1.43 | 1.33 | 1.11 | 1.51 | 1.25 | 1.25 | 1.40 |
| | Acid value before neutralization (mgKOH/g) | | 80 | 87 | 44 | 89 | 75 | - | - |

Note) No. 8 to 12 are copolymers, and No. 13 to 14 are neutralized products of copolymers.

<Neutralization of copolymer>

(Neutralized product of copolymer No. 5)

In a flask provided with a stirrer, a mixed liquid of 14.6 g of the copolymer No. 5, 0.5 g of KOH and 28.3 g of DIW was added, and stirred at room temperature (25 °C) to conduct the neutralization. The obtained copolymer No. 5 had an acid value of 127 mgKOH/g.

(Neutralized products of copolymers No. 6, 7, 11 and 12)

A part of the acidic group of the copolymers No. 6, 7, 11 and 12 was neutralized by the same method as that for the neutralized product of the copolymer No. 5 to produce the neutralized products of the copolymers No. 6, 7, 11 and 12. Table 4 shows the used copolymer, solvent and neutralizing agent. In addition, Table 4 shows the acid value.

Table 4

| Neutralized product of copolymer No. | | | | 5 | 6 | 7 | 11 | 12 |
|---|---|---|---|---|---|---|---|---|
| Neutralization step | Formulation (g) | Copolymer No. 5 | | 14.6 | - | - | - | - |
| | | Copolymer No. 6 | | - | 15.0 | - | - | - |
| | | Copolymer No. 7 | | - | - | 15.1 | - | - |
| | | Copolymer No. 11 | | - | - | - | 14.5 | - |
| | | Copolymer No. 12 | | - | - | - | - | 15.0 |
| | | Neutralizing agent | KOH | 0.5 | 1.2 | 1.3 | 1.3 | 1.1 |
| | | Solvent | DIW | 28.3 | 29.4 | 35.5 | 19.8 | 89.2 |

(continued)

| Neutralized product of copolymer No. | | 5 | 6 | 7 | 11 | 12 |
|---|---|---|---|---|---|---|
| Properties | Acid value before neutralization (mgKOH/g) | 157 | 78 | 85 | 89 | 75 |
| | Acid value after neutralization (mgKOH/g) | 127 | 9 | 4 | 14 | 9 |

<Preparation of coloring composition>

The copolymers No. 1 to 4 and 8 to 10 and the neutralized products of the copolymers No. 5 to 7 and 11 to 14 obtained above were used as the dispersant to prepare the coloring compositions. Specifically, the yellow azo pigment, i.e. PY-150 (Pigment Yellow 150, average particle size: 119 nm, Bayscript Yellow 4GF available from LANXESS Corporation), PY-155 (Pigment Yellow 155, INK JET YELLOW 4GC available from HEUBACH Corporation, average particle size: 90 nm) or PY-180 (Pigment Yellow 180, INK JET YELLOW HG01 available from HEUBACH Corporation, average particle size: 72 nm), the copolymer or the neutralized product of the copolymer, the neutralizing agent, and deionized water having the formulations shown in Tables 5 and 6 were mixed, zirconia beads having a diameter of 0.3 mm were added, and the mixture was stirred and fully dispersed for 5 hours with a bead mill (trade name: DISPERMAT CA available from VMA-GETZMANN GmbH). After the stirring was completed, the beads were filtered out to prepare the coloring compositions No. 1 to 25. The viscosity and particle size of the obtained dispersion compositions were measured, and the results were shown in Tables 5 and 6.

It is noted that in Table 6, "gel" means that the coloring composition gelled and the viscosity thereof was failed to be measured, "Failed to be dispersed" means that the yellow azo pigment was failed to be sufficiently dispersed, and ">2000" means that the viscosity exceeded 2,000 mPa·s even if the rotor rotational speed was changed.

Table 5-1

| Coloring composition No. | | | 1 | 2 | 3 | 4 | 5 | 6 |
|---|---|---|---|---|---|---|---|---|
| Formulation (mass %) | Copolymer | | 8.00 | 8.00 | 8.00 | 8.00 | 8.00 | 8.00 |
| | | No. | No.1 | No.1 | No.1 | No.1 | No.2 | No.3 |
| | Neutralized product of copolymer | | - | - | - | - | - | - |
| | | No. | - | - | - | - | - | - |
| | Coloring agent | PY-150 | 20.00 | 20.00 | 20.00 | 20.00 | 20.00 | 20.00 |
| | | PY-155 | - | - | - | - | - | - |
| | | PY-180 | - | - | - | - | - | - |
| | Neutralizing agent | KOH | 0.68 | 0.49 | - | - | 0.70 | 0.64 |
| | | Ammonia | - | - | 0.20 | - | - | - |
| | | DMAE | - | - | - | 1.12 | - | - |
| | Dispersion medium | Deionized water | 71.32 | 71.51 | 71.80 | 70.88 | 71.30 | 71.36 |
| Acid value of copolymer before neutralization (mgKOH/g) | | | 93 | 93 | 93 | 93 | 94 | 78 |
| Neutralization ratio of acid groups in copolymer after mixing (mole %) | | | 91 | 65 | 90 | 94 | 93 | 100 |
| Dispersibility evaluation | Viscosity (mPa·s) | Immediately after preparation | 68.7 | 28.2 | 466 | 99.1 | 80.5 | 363 |
| | | Stored at 40 °C for one week | 212 | 37.8 | 181 | 157 | 83.5 | 397 |
| | Particle size (nm) | Immediately after preparation | 116 | 114 | 118 | 120 | 129 | 128 |
| | | Stored at 40 °C for one week | 129 | 131 | 125 | 115 | 139 | 131 |

Table 5-2

| Coloring composition No. | | | 7 | 8 | 9 | 10 | 11 |
|---|---|---|---|---|---|---|---|
| Formulation (mass %) | Copolymer | | 8.00 | - | 8.00 | 8.00 | - |
| | | No. | No.4 | - | No.1 | No.1 | - |
| | Neutralized product of copolymer | | - | 8.00 | - | - | 8.00 |
| | | No. | - | No.5 | - | - | No.13 |
| | Coloring agent | PY-150 | 20.00 | 20.00 | - | - | - |
| | | PY-155 | - | - | 20.00 | - | 20.00 |
| | | PY-180 | - | - | - | 20.00 | - |
| | Neutralizing agent | KOH | 0.83 | 1.02 | 0.68 | 0.68 | - |
| | | Ammonia | - | - | - | - | - |
| | | DMAE | - | - | - | - | - |
| | Dispersion medium | Deionized water | 71.17 | 70.98 | 71.32 | 71.32 | 72.00 |
| Acid value of copolymer before neutralization (mgKOH/g) | | | 102 | 157 | 93 | 93 | - |
| Neutralization ratio of acid groups in copolymer after mixing (mole %) | | | 100 | 100 | 91 | 91 | 100 |
| Dispersibility evaluation | Viscosity (mPa·s) | Immediately after preparation | 127 | 118 | 56.5 | 57.5 | 77.8 |
| | | Stored at 40 °C for one week | 164 | 143 | 52.3 | 34.1 | 66.1 |
| | Particle size (nm) | Immediately after preparation | 110 | 132 | 199 | 163 | 176 |
| | | Stored at 40 °C for one week | 114 | 146 | 189 | 162 | 177 |

Table 6-1

| Coloring composition No. | | | 12 | 13 | 14 | 15 | 16 | 17 | 18 |
|---|---|---|---|---|---|---|---|---|---|
| Formulation (mass %) | Copolymer | | - | - | - | 8.00 | 8.00 | 8.00 | 8.00 |
| | | No. | - | - | - | No.8 | No.9 | No.1 | No.1 |
| | Neutralized product of copolymer | | 8.00 | 8.00 | 8.00 | - | - | - | - |
| | | No. | No.5 | No.6 | No.7 | - | - | - | - |
| | Coloring agent | PY-150 | 20.00 | 20.00 | 20.00 | 20.00 | 20.00 | 20.00 | 20.00 |
| | | PY-155 | - | - | - | - | - | - | - |
| | | PY-180 | - | - | - | - | - | - | - |
| | Neutralizing agent | KOH | 0.14 | - | - | 0.69 | 0.68 | - | 0.28 |
| | | Ammonia | - | - | - | - | - | - | - |
| | | DMAE | - | - | - | - | - | - | - |
| | Dispersion medium | Deionized water | 71.86 | 72.00 | 72.00 | 71.31 | 71.32 | 72.00 | 71.72 |
| Acid value of copolymer before neutralization (mgKOH/g) | | | 157 | 78 | 85 | 80 | 87 | 93 | 93 |
| Neutralization ratio of acid groups in copolymer after mixing (mole %) | | | 30 | 88 | 96 | 100 | 98 | 0 | 37 |
| Dispersibility evaluation | Viscosity (mPa·s) | Immediately after preparation | 133 | 389 | 991 | 42.1 | 56.9 | Failed to be dispersed | 31.9 |
| | | Stored at 40 °C for one week | >2000 | gel | gel | gel | gel | - | gel |
| | Particle size (nm) | Immediately after preparation | 117 | 123 | 139 | 124 | 126 | - | 105 |
| | | Stored at 40 °C for one week | 143 | - | - | - | - | - | - |

Table 6-2

| Coloring composition No. | | | 19 | 20 | 21 | 22 | 23 | 24 | 25 |
|---|---|---|---|---|---|---|---|---|---|
| Formulation (mass %) | Copolymer | | 8.00 | 8.00 | - | - | 8.00 | 8.00 | - |
| | | No. | No.1 | No.10 | - | - | No.8 | No.8 | - |
| | Neutralized product of copolymer | | - | - | 8.00 | 8.00 | - | - | 8.00 |
| | | No. | - | - | No.11 | No.12 | - | - | No.14 |
| | Coloring agent | PY-150 | 20.00 | 20.00 | 20.00 | 20.00 | - | - | - |
| | | PY-155 | - | - | - | - | 20.00 | - | 20.00 |
| | | PY-180 | - | - | - | - | - | 20.00 | - |
| | Neutralizing agent | KOH | 0.38 | 0.35 | - | - | 0.68 | 0.68 | - |
| | | Ammonia | - | - | - | - | - | - | - |
| | | DMAE | - | - | - | - | - | - | - |
| | Dispersion medium | Deionized water | 71.62 | 71.65 | 72.00 | 72.00 | 71.32 | 71.32 | 72.00 |
| Acid value of copolymer before neutralization (mgKOH/g) | | | 93 | 44 | 89 | 75 | 93 | 93 | - |
| Neutralization ratio of acid groups in copolymer after mixing (mole %) | | | 50 | 100 | 84 | 88 | 91 | 91 | 100 |
| Dispersibility evaluation | Viscosity (mPa·s) | Immediately after preparation | 63.4 | 160 | >2000 | Failed to be dispersed | Failed to be dispersed | Failed to be dispersed | Failed to be dispersed |
| | | Stored at 40 °C for one week | gel | gel | gel | - | - | - | - |
| | Particle size (nm) | Immediately after preparation | 106 | 111 | 129 | - | - | - | - |
| | | Stored at 40 °C for one week | - | - | - | - | - | - | - |

The coloring compositions No. 1 to 11 are coloring compositions containing a yellow azo pigment, a dispersant and water, wherein the dispersant is a neutralized product of a block copolymer, the block copolymer has an A block comprising a structural unit (a-1) having a group represented by a formula (1) and a structural unit (a-2) having an acidic group, and a B block comprising a structural unit (b-1) having a nitrogen-containing heterocyclic group and a structural unit (b-2) having an aliphatic hydrocarbon group, comprises the structural unit (b-1) in an amount ranging from 51 mass % to 99 mass % in 100 mass % of the B block, and has an acid value of 50 mgKOH/g or more, and the dispersant has more than 50 mol % of an acidic group included in the structural unit (a-2) of the block copolymer neutralized.

In these coloring compositions No. 1 to 11, the yellow azo pigment has a high dispersibility and an excellent dispersion stability.

The coloring compositions No. 12 and 17 to 19 are cases that in the neutralized product of the copolymer used in the dispersant, 50 mol % or less of the acidic group included in the structural unit (a-2) was neutralized.

The coloring compositions No. 13 and 14 are cases that the copolymers No. 6 and 7 used in the dispersant do not have the structural unit (a-1) having the group represented by the formula (1) in the A block.

The coloring compositions No. 15, 16, 21, and 23 to 25 are cases that the copolymers No. 8, 9, 11 and 14 used in the dispersant do not have the structural unit (b-2) having the aliphatic hydrocarbon group in the B block.

The coloring composition No. 20 is a case that the copolymer No. 10 used in the dispersant has an acid value of less than 50 mgKOH/g before the neutralization.

The coloring composition No. 22 is a case that the copolymer No. 12 used in the dispersant comprises the structural unit (b-1) having the nitrogen-containing heterocyclic group in an amount of less than 51 mass % in the B block.

These coloring compositions No. 12 to 16 and 18 to 21 had inferior dispersion stability. In addition, the coloring compositions No. 17 and 22 to 25 failed to disperse PY-150, PY-155 or PY-180.

The coloring compositions No. 1, 9 and 10 differ from each other only in the type of the coloring material. When the

difference in the particle size of the pigment in the coloring composition before and after the dispersion is compared, the pigment of the coloring composition No. 1 has an equivalent particle size before and after the dispersion. It can be seen from this result that the dispersant used in the present invention works especially well for the azomethine metal complex pigment.

The present invention includes the following embodiments.

(Embodiment 1)

1. A coloring composition containing a yellow azo metal complex pigment, a dispersant and an aqueous dispersion medium, wherein

the dispersant is a neutralized product of a block copolymer,
the block copolymer has an A block comprising a structural unit (a-1) having a group represented by a formula (1) and a structural unit (a-2) having an acidic group, and a B block comprising a structural unit (b-1) having a nitrogen-containing heterocyclic group and a structural unit (b-2) having an aliphatic hydrocarbon group,
the block copolymer comprises the structural unit (b-1) in an amount ranging from 51 mass % to 99 mass % in 100 mass % of the B block,
the block copolymer has an acid value of 50 mgKOH/g or more, and
the dispersant has more than 50 mol % of an acidic group included in the structural unit (a-2) of the block copolymer neutralized.

$$*\text{-}(R^{12}O)_{m1}\text{-}R^{11} \qquad (1)$$

[In the formula (1), $R^{11}$ represents a hydrogen atom or an alkyl group having 1 to 3 carbon atoms, $R^{12}$ represents an alkylene group having 1 to 3 carbon atoms, m1 represents an integer ranging from 2 to 30, a plurality of $R^{12}$ are identical to or different from each other, and * represents a bonding site.]

(Embodiment 2)

The coloring composition according to the embodiment 1, wherein the dispersant has the acidic group included in the structural unit (a-2) of the block copolymer neutralized by at least one member selected from the group consisting of an alkali metal, an organic amine and ammonia.

(Embodiment 3)

The coloring composition according to the embodiment 1 or 2, wherein an amount of the structural unit (a-1) in 100 mass % of the A block ranges from 10 mass % to 70 mass %.

(Embodiment 4)

The coloring composition according to any one of the embodiments 1 to 3, wherein a mass ratio (A block/B block) of the A block to the B block in the block copolymer ranges from 50/50 to 99/1.

(Embodiment 5)

The coloring composition according to any one of the embodiments 1 to 4, wherein the structural unit (a-1) is a structural unit represented by a formula (2).

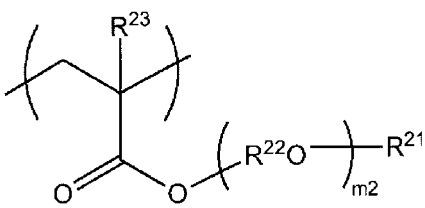

(2)

[In the formula (2), $R^{21}$ represents a hydrogen atom or an alkyl group having 1 to 3 carbon atoms, $R^{22}$ represents an alkylene group having 1 to 3 carbon atoms, $R^{23}$ represents a hydrogen atom or a methyl group, m2 represents an integer ranging from 2 to 30, and a plurality of $R^{22}$ are identical to or different from each other.]

(Embodiment 6)

The coloring composition according to any one of the embodiments 1 to 5, wherein the structural unit (a-2) is a structural unit represented by a formula (3).

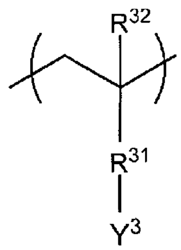

(3)

[In the formula (3), $R^{31}$ represents a single bond or a divalent organic group, $R^{32}$ represents a hydrogen atom or a methyl group, and $Y^3$ represents an acidic group.]

(Embodiment 7)

The coloring composition according to any one of the embodiments 1 to 6, wherein the structural unit (b-1) is a structural unit represented by a formula (4).

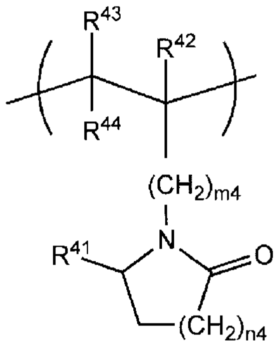

(4)

[In the formula (4), $R^{41}$, $R^{42}$, $R^{43}$ and $R^{44}$ are identical to or different from each other, and represents a hydrogen atom or an alkyl group having 1 to 10 carbon atoms and optionally a substituent group, m4 represents an integer ranging from 0 to 4, and n4 represents an integer ranging from 1 to 3.]

(Embodiment 8)

The coloring composition according to any one of the embodiments 1 to 7, wherein the structural unit (b-2) is a structural unit represented by a formula (5).

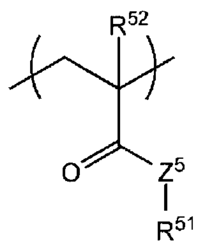

(5)

[In the formula (5), $R^{51}$ represents an aliphatic hydrocarbon group, $Z^5$ represents O or NH, and $R^{52}$ represents a hydrogen atom or a methyl group.]

(Embodiment 9)

The coloring composition according to any one of the embodiments 1 to 8, wherein the block copolymer has a weight average molecular weight (Mw) ranging from 5,000 to 40,000.

(Embodiment 10)

The coloring composition according to any one of the embodiments 1 to 9, wherein the block copolymer is obtained by a living polymerization method, and has a molecular weight distribution (Mw/Mn) of 2.5 or less.

(Embodiment 11)

The coloring composition according to any one of the embodiments 1 to 10, wherein the yellow azo pigment is at least one member selected from the group consisting of an azomethine metal complex pigment and an acetoacetarylide pigment.

(Embodiment 12)

The coloring composition according to any one of the embodiments 1 to 11, wherein the yellow azo pigment is at least one member selected from the group consisting of C.I. Pigment Yellow 117, C.I. Pigment Yellow 129, C.I. Pigment Yellow 150, C.I. Pigment Yellow 153, C.I. Pigment Yellow 155 and C.I. Pigment Yellow 180.

(Embodiment 13)

The coloring composition according to any one of the embodiments 1 to 12, wherein the coloring composition contains an aqueous organic solvent in an amount of 10 mass % or less.

(Embodiment 14)

The coloring composition according to any one of the embodiments 1 to 13, wherein the coloring composition is used as an inkjet ink.

(Embodiment 15)

A production method of a coloring composition, comprising a step of mixing a yellow azo pigment, a block copolymer, a neutralizing agent, and an aqueous dispersion medium, wherein

the block copolymer has an A block comprising a structural unit (a-1) having a group represented by a formula (1) and a structural unit (a-2) having an acidic group, and a B block comprising a structural unit (b-1) having a nitrogen-containing heterocyclic group and a structural unit (b-2) having an aliphatic hydrocarbon group, comprises the structural unit (b-1) in an amount ranging from 51 mass % to 99 mass % in 100 mass % of the B block, and has an acid value of 50 mgKOH/g or more, and
an amount of the neutralizing agent is adjusted such that an acidic group included in the structural unit (a-2) of the block copolymer has a neutralization degree of more than 50 mol %.

$$*\text{-}(R^{12}O)_{m1}\text{-}R^{11} \qquad (1)$$

[In the formula (1), $R^{11}$ represents a hydrogen atom or an alkyl group having 1 to 3 carbon atoms, $R^{12}$ represents an alkylene group having 1 to 3 carbon atoms, m1 represents an integer ranging from 2 to 30, a plurality of $R^{12}$ are identical to or different from each other, and * represents a bonding site.]

## Claims

**1.** A coloring composition containing a yellow azo pigment, a dispersant and an aqueous dispersion medium, wherein

the dispersant is a neutralized product of a block copolymer,
the block copolymer has an A block comprising a structural unit (a-1) having a group represented by a formula (1)

and a structural unit (a-2) having an acidic group, and a B block comprising a structural unit (b-1) having a nitrogen-containing heterocyclic group and a structural unit (b-2) having an aliphatic hydrocarbon group,
the block copolymer comprises the structural unit (b-1) in an amount ranging from 51 mass % to 99 mass % in 100 mass % of the B block,
the block copolymer has an acid value of 50 mgKOH/g or more, and
the dispersant has more than 50 mol % of an acidic group included in the structural unit (a-2) of the block copolymer neutralized,

$$*-(R^{12}O)_{m1}-R^{11} \qquad (1)$$

in the formula (1), $R^{11}$ represents a hydrogen atom or an alkyl group having 1 to 3 carbon atoms, $R^{12}$ represents an alkylene group having 1 to 3 carbon atoms, m1 represents an integer ranging from 2 to 30, a plurality of $R^{12}$ are identical to or different from each other, and * represents a bonding site.

2. The coloring composition according to claim 1, wherein the dispersant has the acidic group included in the structural unit (a-2) of the block copolymer neutralized by at least one member selected from the group consisting of an alkali metal, an organic amine and ammonia.

3. The coloring composition according to claim 1 or 2, wherein an amount of the structural unit (a-1) in 100 mass % of the A block ranges from 10 mass % to 70 mass %.

4. The coloring composition according to claim 1 or 2, wherein a mass ratio (A block/B block) of the A block to the B block in the block copolymer ranges from 50/50 to 99/1.

5. The coloring composition according to claim 1 or 2, wherein the structural unit (a-1) is a structural unit represented by a formula (2),

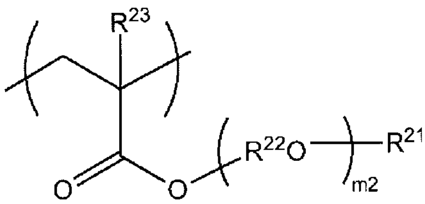

(2)

in the formula (2), $R^{21}$ represents a hydrogen atom or an alkyl group having 1 to 3 carbon atoms, $R^{22}$ represents an alkylene group having 1 to 3 carbon atoms, $R^{23}$ represents a hydrogen atom or a methyl group, m2 represents an integer ranging from 2 to 30, and a plurality of $R^{22}$ are identical to or different from each other.

6. The coloring composition according to claim 1 or 2, wherein the structural unit (a-2) is a structural unit represented by a formula (3),

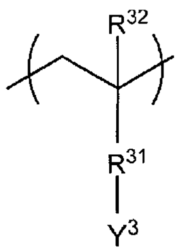

(3)

in the formula (3), $R^{31}$ represents a single bond or a divalent organic group, $R^{32}$ represents a hydrogen atom or a methyl group, and $Y^3$ represents an acidic group.

7. The coloring composition according to claim 1 or 2, wherein the structural unit (b-1) is a structural unit represented by a formula (4),

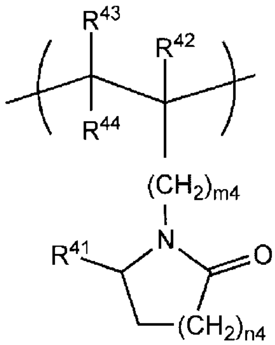

(4)

in the formula (4), $R^{41}$, $R^{42}$, $R^{43}$ and $R^{44}$ are identical to or different from each other, and represents a hydrogen atom or an alkyl group having 1 to 10 carbon atoms and optionally a substituent group, m4 represents an integer ranging from 0 to 4, and n4 represents an integer ranging from 1 to 3.

**8.** The coloring composition according to claim 1 or 2, wherein the structural unit (b-2) is a structural unit represented by a formula (5),

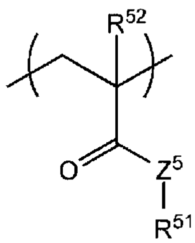

(5)

in the formula (5), $R^{51}$ represents an aliphatic hydrocarbon group, $Z^5$ represents O or NH, $R^{52}$ represents a hydrogen atom or a methyl group.

**9.** The coloring composition according to claim 1 or 2, wherein the block copolymer has a weight average molecular weight (Mw) ranging from 5,000 to 40,000.

**10.** The coloring composition according to claim 1 or 2, wherein the block copolymer is obtained by a living polymerization method, and has a molecular weight distribution (Mw/Mn) of 2.5 or less.

**11.** The coloring composition according to claim 1 or 2, wherein the yellow azo pigment is at least one member selected from the group consisting of an azomethine metal complex pigment and an acetoacetarylide pigment.

**12.** The coloring composition according to claim 1 or 2, wherein the yellow azo pigment is at least one member selected from the group consisting of C.I. Pigment Yellow 117, C.I. Pigment Yellow 129, C.I. Pigment Yellow 150, C.I. Pigment Yellow 153, C.I. Pigment Yellow 155 and C.I. Pigment Yellow 180.

**13.** The coloring composition according to claim 1 or 2, wherein the coloring composition contains an aqueous organic solvent in an amount of 10 mass % or less.

**14.** The coloring composition according to claim 1 or 2, wherein the coloring composition is used as an inkjet ink.

**15.** A production method of a coloring composition, comprising a step of mixing a yellow azo pigment, a block copolymer, a neutralizing agent, and an aqueous dispersion medium, wherein

the block copolymer has an A block comprising a structural unit (a-1) having a group represented by a formula (1) and a structural unit (a-2) having an acidic group, and a B block comprising a structural unit (b-1) having a nitrogen-containing heterocyclic group and a structural unit (b-2) having an aliphatic hydrocarbon group, comprises the structural unit (b-1) in an amount ranging from 51 mass % to 99 mass % in 100 mass % of the B block, and has an acid value of 50 mgKOH/g or more, and

an amount of the neutralizing agent is adjusted such that an acidic group included in the structural unit (a-2) of the

block copolymer has a neutralization degree of more than 50 mol %,

$$*\text{-}(R^{12}O)_{m1}\text{-}R^{11} \qquad (1)$$

in the formula (1), $R^{11}$ represents a hydrogen atom or an alkyl group having 1 to 3 carbon atoms, $R^{12}$ represents an alkylene group having 1 to 3 carbon atoms, m1 represents an integer ranging from 2 to 30, a plurality of $R^{12}$ are identical to or different from each other, and * represents a bonding site.

## INTERNATIONAL SEARCH REPORT

International application No.
**PCT/JP2024/017279**

**A. CLASSIFICATION OF SUBJECT MATTER**

***C08L 53/00***(2006.01)i; ***C08F 290/06***(2006.01)i; ***C08F 293/00***(2006.01)i; ***C08K 5/3462***(2006.01)i; ***C09B 55/00***(2006.01)i; ***C09D 11/326***(2014.01)i; ***C09K 23/52***(2022.01)i
FI: C08L53/00; C09D11/326; C09K23/52; C09B55/00 C; C08K5/3462; C08F293/00; C08F290/06

According to International Patent Classification (IPC) or to both national classification and IPC

**B. FIELDS SEARCHED**

Minimum documentation searched (classification system followed by classification symbols)

C08L53/00; C08F290/06; C08F293/00; C08K5/3462; C09B55/00; C09D11/326; C09K23/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-218547 A (OTSUKA CHEMICAL CO., LTD.) 26 December 2019 (2019-12-26) entire text | 1-15 |
| A | WO 2017/135011 A1 (OTSUKA CHEMICAL CO., LTD.) 10 August 2017 (2017-08-10) entire text | 1-15 |
| A | JP 2010-006981 A (MITSUBISHI CHEMICAL CORPORATION) 14 January 2010 (2010-01-14) entire text | 1-15 |
| A | JP 2021-004308 A (OTSUKA CHEMICAL CO., LTD.) 14 January 2021 (2021-01-14) entire text | 1-15 |
| A | JP 2005-177756 A (SAMSUNG ELECTRONICS CO., LTD.) 07 July 2005 (2005-07-07) entire text | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/017279**

**C. DOCUMENTS CONSIDERED TO BE RELEVANT**

| Category* | Citation of document, with indication, where appropriate, of the relevant passages | Relevant to claim No. |
|---|---|---|
| A | JP 2016-126154 A (KAO CORPORATION) 11 July 2016 (2016-07-11)<br>entire text | 1-15 |
| A | JP 2011-241259 A (DAINICHISEIKA COLOR & CHEMICALS MFG. CO., LTD.) 01 December 2011 (2011-12-01)<br>entire text | 1-15 |

Form PCT/ISA/210 (second sheet) (July 2022)

**INTERNATIONAL SEARCH REPORT**
**Information on patent family members**

International application No.
**PCT/JP2024/017279**

| Patent document cited in search report | Publication date (day/month/year) | Patent family member(s) | Publication date (day/month/year) |
|---|---|---|---|
| JP 2019-218547 A | 26 December 2019 | TW 201925253 A | |
| | | CN 111247182 A | |
| | | KR 10-2020-0083457 A | |
| WO 2017/135011 A1 | 10 August 2017 | US 2019/0002620 A1 | |
| | | EP 3412693 A1 | |
| | | KR 10-2018-0104299 A | |
| | | CN 108699201 A | |
| | | TW 201741357 A | |
| JP 2010-006981 A | 14 January 2010 | (Family: none) | |
| JP 2021-004308 A | 14 January 2021 | (Family: none) | |
| JP 2005-177756 A | 07 July 2005 | US 2005/0132931 A1 | |
| | | KR 10-2005-0065713 A | |
| | | CN 1654115 A | |
| JP 2016-126154 A | 11 July 2016 | (Family: none) | |
| JP 2011-241259 A | 01 December 2011 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018109095 A
- WO 200414848 A
- WO 200414962 A
- WO 2004072126 A
- WO 2004096870 A
- WO 2020116144 A